# EUROPEAN PATENT SPECIFICATION

(11) **EP 4 563 331 B1**
(45) Date of publication and mention of the grant of the patent: **25.11.2026**
(21) Application number: 24202432.1
(22) Date of filing: 25.09.2024
(51) Int. Cl.: B29C 70/38, B28B 1/30, B28B 11/00, B28B 13/02, B28B 23/00, C04B 35/10, C04B 35/18, C04B 35/48, C04B 35/52, C04B 35/56, C04B 35/58, C04B 35/80

(54) **CERAMIC COMPOSITE MANUFACTURING SYSTEMS AND METHODS**
SYSTEME UND VERFAHREN ZUR HERSTELLUNG VON KERAMIKVERBUNDSTOFFEN
SYSTÈMES ET PROCÉDÉS DE FABRICATION DE COMPOSITE CÉRAMIQUE

(30) Priority: 29.11.2023 US 202363603819 P; 22.01.2024 NL 2036855
(43) Date of publication of application: 04.06.2025
(73) Proprietor: The Boeing Company, Arlington, VA 22202 (US)
(72) Inventor: Wienhold, Erik N., ARLINGTON, 22202 (US); Heng, Sangvavann, ARLINGTON, 22202 (US); Trowbridge, Michael J., ARLINGTON, 22202 (US); Smith, Brian J., ARLINGTON, 22202 (US); Johnson, Brice A., ARLINGTON, 22202 (US); Zgherea, Lisa C., ARLINGTON, 22202 (US); Brown, Cristopher R., ARLINGTON, 22202 (US); Fritzke, Ricardo A., ARLINGTON, 22202 (US)
(74) Representative: Arnold & Siedsma

(56) References cited:
- EP-A1- 3 705 275
- DE-A1- 102016 101 610
- US-A1- 2017 320 785
- US-A1- 2019 039 252
- US-A1- 2019 070 772

## Description

The present disclosure relates to ceramic matrix composite structures, and, more particularly, to systems and methods for placing plies of a ceramic matrix composite material.

Currently, placement of ceramic matrix composite plies on layup tools is performed manually or at least partially automatically using Pick-and-Place (PnP) tools. Placement of ceramic matrix composite plies over curved surfaces results in variable quality and inconsistencies in compaction. Additionally, such layup operations are time intensive, require inspection and rework and lead to overall increased life cycle time for placement and compaction of the ceramic matrix composite ply on the layup tool. Accordingly, those skilled in the art continue with research and development efforts in ceramic matrix composite manufacturing.

The abstract of US 2019/039252 Al states: "An end effector is provided that includes a vacuum source and a plurality of gripping surfaces with each gripping surface including a plurality of vacuum zones having a non-smooth portion for distributing a vacuum, and a plurality of openings defined over the non-smooth portion for distributing the vacuum on the gripping surface using the vacuum source. The plurality of gripping surfaces is generally arranged in a polygonal shape. The plurality of vacuum zones are generally configured to grip cut-outs having a plurality of shapes. Methods are also provided for removing a cut-out from a sheet of material using an end effector having a plurality of gripping surfaces".

The (translated) abstract of DE 10 2016 101610 A1 states: "A tool is proposed for gripping, placing and draping a fiber blank for a local reinforcement layer during the production of a three-dimensional preform for the production of fiber-reinforced molded parts. The tool has at least one gripping element, in particular a vacuum gripping element, for gripping and receiving the fiber blank, and at least one draping stamp element for draping the fiber blank, wherein the at least one gripping element and the at least one draping stamp element are adjustable relative to one another, in particular between a first position for gripping the fiber blank and a second position for molding the fiber blank, by means of the at least one draping stamp element, onto a fiber fabric stack. Preferably, a fixing device, such as an ultrasonic sonotrode, can also be provided in order to fix the fiber blank on the fiber fabric stack".

The abstract of EP 3 705 275 A1 states: "A gripping device (76) is provided for lifting a preform for a wind turbine blade from a preform mould (71). The gripping device (76) comprises a base frame (62), a plurality of arms (78) slidably mounted on the base frame (62), each arm (78) having a proximal end and a distal end, a plurality of gripping members (86) for gripping a top surface (75) of the preform. The vertical position of one or more arms (78) of the gripping device (76) relative to the base frame (62) may change when lowering the gripping device (76) towards a preform to reflect the top surface (75) of the perform."

The abstract of US 2017 / 320 785 A1 states: "Methods for forming ceramic matrix composite (CMC) components are provided. In one exemplary embodiment, a method comprises automatically laying up CMC plies. Laying up plies includes transferring a CMC ply to a layup tool; applying heat to the CMC ply; and stacking the CMC ply with at least one other CMC ply. In various embodiments, CMC plies may be laid up using an automated machine. In some embodiments, a CMC ply may be transferred to a layup tool using an automated machine and the CMC ply may be stacked with at least one other CMC ply using the automated machine."

Disclosed are examples of a method for manufacturing a ceramic composite material, a method for positioning a ceramic composite material, and a system for manufacturing a ceramic composite material. The following is a non-exhaustive list of examples, which may or may not be claimed, of the subject matter according to the present disclosure.

In an example, the disclosed manufacturing method includes steps of: (1) picking up a ply of the ceramic composite material using an end effector; (2) moving the ply to a forming-surface using the end effector; and conforming the ply to a shape of the forming-surface using the end effector.

In an example, the disclosed positioning method includes steps of: (1) positioning an end effector relative to a ply of the ceramic composite material, wherein the end effector includes: a base; an arm that is coupled to and movable relative to the base; a base-gripper that is coupled to the base; and an arm-gripper that is coupled to the arm; (2) adhering the base-gripper to a first ply-portion of the ply; (3) adhering the arm-gripper to a second ply-portion of the ply; (4) moving the end effector relative to a forming-surface such that the first ply-portion of the ply is placed on a first surface-portion of the forming-surface; and (5) moving the arm relative to the base and to the forming-surface such that the second ply-portion is placed on a second surface-portion of the forming-surface, wherein the first surface-portion and the second surface-portion are non-coplanar. This method can be applied as a further step of the manufacturing method or can be seen as a separate method.

In an example, the disclosed system includes a robotic manipulator and an end effector that is coupled to the robotic manipulator. The end effector includes a base and an arm that is coupled to and movable relative to the base. The end effector also includes a base-gripper that is coupled to the base. The end effector further includes an arm-gripper that is coupled to the arm. The base-gripper and the arm-gripper hold a ply of the ceramic composite material. The robotic manipulator moves the ply relative to a forming-surface such that a first ply-portion is placed on a first surface-portion of the forming-surface. The arm moves relative to the base and the forming-surface such that a second ply-portion of the ply is placed on a second surface-portion of the forming-surface.

Such method and system allow placement of ceramic matrix composites, in particular on non-planar surfaces, with reduced risk of damage.

Other examples of the system and the methods will become apparent from the following detailed description, the accompanying drawings, and the appended claims.
Fig. 1 is a flow diagram of an example of a method for manufacturing a ceramic matrix composite structure;
Fig. 2 is a flow diagram of an example of a method for positioning a ceramic matrix composite material;
Fig. 3 is a schematic block diagram of an example of a system for manufacturing a ceramic matrix composite structure;
Fig. 4 is a schematic illustration of an example of a portion of the system;
Fig. 5 is a schematic illustration of an example of a portion of the system;
Fig. 6 is a schematic illustration of an example of a portion of the system;
Fig. 7 is a schematic illustration of an example of a portion of the system;
Fig. 8 is a schematic illustration of an example of a portion of the system;
Fig. 9 is a schematic illustration of an example of a portion of the system;
Fig. 10 is a schematic illustration of an example of a portion of the system;
Fig. 11 is a schematic illustration of an example of a portion of the system;
Fig. 12 is a schematic illustration of an example of a portion of the system;
Fig. 13 is a schematic illustration of an example of a portion of the system;
Fig. 14 is a schematic illustration of an example of a portion of the system;
Fig. 15 is a schematic illustration of an example of a portion of the system;
Fig. 16 is a schematic illustration of an example of a portion of the system;
Fig. 17 is a schematic illustration of an example of a portion of the system;
Fig. 18 is a schematic illustration of an example of a portion of the system;
Fig. 19 is a flow diagram of an example of an aircraft manufacturing and service method; and
Fig. 20 is a schematic block diagram of an example of an aircraft.

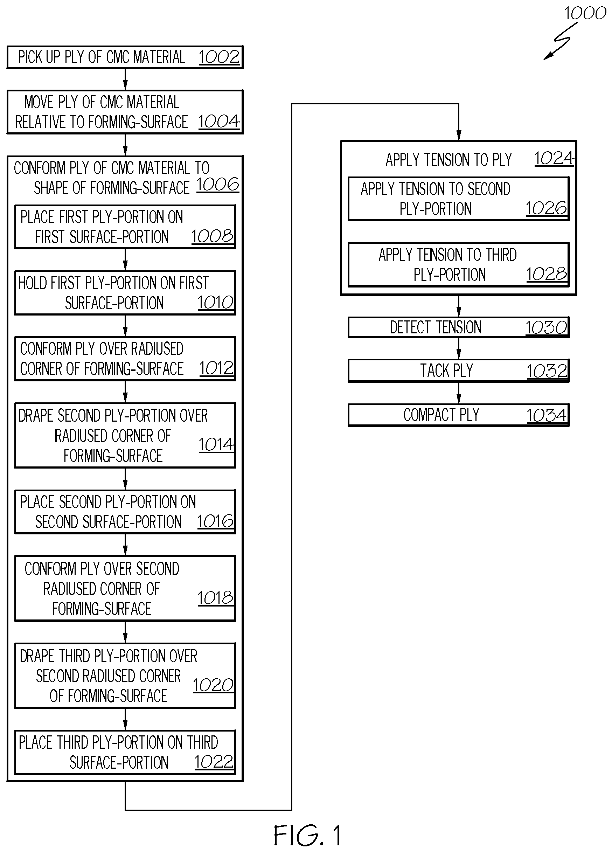

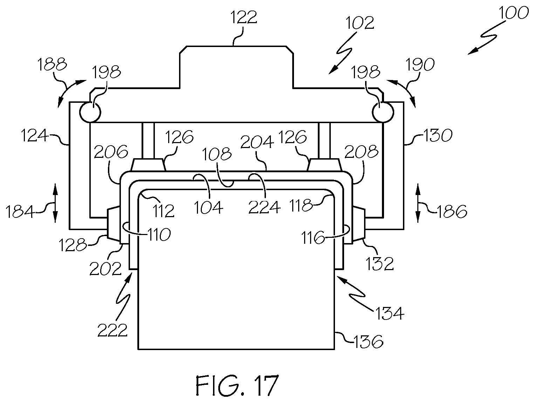

Referring generally to Figs. 1-18, by way of examples, the present disclosure is directed to methods and systems for manufacturing a ceramic matrix composite (CMC) structure. More particularly, the present disclosure is directed to methods and systems for positioning a CMC material on a forming surface. The disclosed methods and the systems facilitate improvements in CMC manufacturing by providing controlled draping of a ply of CMC material during ply-by-ply formation of a CMC structure. While examples of the methods and system provide particular advantages and benefits related to manufacturing CMC structures, the methods and system can also be used in manufacturing other non-polymer composite structures.

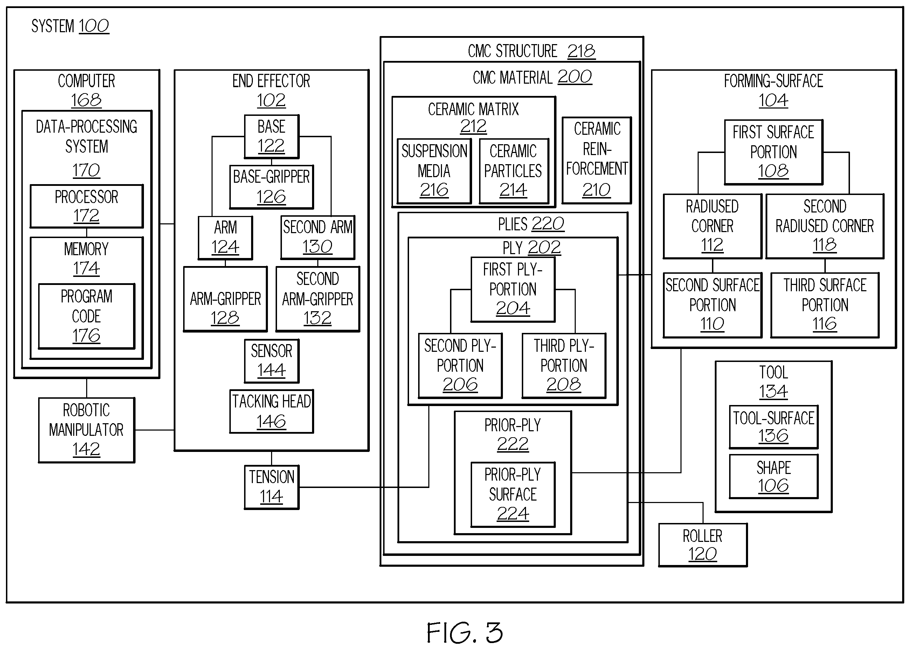

Referring to Fig. 3, ceramic matrix composites (CMCs) are a subgroup of composite materials and a subgroup of ceramics. Ceramic matrix composites include ceramic fibers embedded in a ceramic matrix. Both the fibers and the matrix can include any ceramic material, including carbon and carbon fibers. In one or more examples, a ceramic matrix composite material 200 is a ceramic matrix composite that includes a ceramic reinforcement 210 and a ceramic matrix 212.

In one or more examples, the ceramic reinforcement 210 is pre-impregnated with the ceramic matrix 212. In such examples, a ply 202 of the ceramic matrix composite material 200 can also be referred to as a ceramic matrix composite prepreg.

In one or more examples, the ceramic reinforcement 210 includes at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers. Other suitable reinforcement materials are also contemplated for use as the ceramic reinforcement 210.

In one or more examples, the ceramic matrix 212 includes at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix. Other suitable matrix materials are also contemplated for use as the ceramic matrix 212.

In one or more examples, the ceramic matrix 212 includes ceramic particles 214 dispersed in a suspension media 216 (e.g., fluid or other vehicle). In one or more examples, the ceramic matrix 212 is an aqueous suspension (e.g., the suspension media 216 is an aqueous media). In one or more examples, the ceramic matrix 212 is a non-aqueous suspension (e.g., the suspension media 216 is a non-aqueous media). The ceramic matrix 212 has various viscosities depending on the suspension media 216 used. In one or more examples, the ceramic particles 214 include at least one of carbon particles, silicon carbide particles, alumina particles, alumina silica particles, aluminum nitride particles, silicon nitride particles, mullite particles, geo-polymer particles, and zirconia particles. Other suitable materials are also contemplated for use as the ceramic particles 214.

Typically, ceramic matrix composites have different tack and texture than polymer matrix composites (PMCs). As an example, the reinforcement material (e.g., ceramic reinforcement 210) of a fabric-based ceramic matrix composite, such as ceramic fibers, is more brittle and/or is stiffer than the reinforcement material of a fabric-based polymer matrix composite (PMC), such as carbon fibers. Additionally, the matrix material (e.g., ceramic matrix 212) of a fabric-based ceramic matrix composite is less viscous or has different tack characteristics than the matrix material of a fabric-based polymer matrix composite. More brittle and stiffer fibers along with different tack resin require different systems and methods for Pick-and-Place (PnP) processing. As such, traditional Pick-and-Place techniques and tools used with polymer matrix composites are not suitable for use with ceramic matrix composites.

Additionally, Pick-and-Place robotic layup of fabric-based ceramic matrix composites (e.g., ceramic matrix composite prepregs) often require positioning and compaction of plies of ceramic matrix composite prepreg over a formation and compaction surface having a relatively tight radius or high curvature to form a part geometry with a corresponding tight radius or high curvature. To accomplish this, the system 100, the method 1000, and the method 2000 utilize a unique end effector with articulating grippers to control ply draping and, thereby, to prevent formation of defects during placement and compaction.

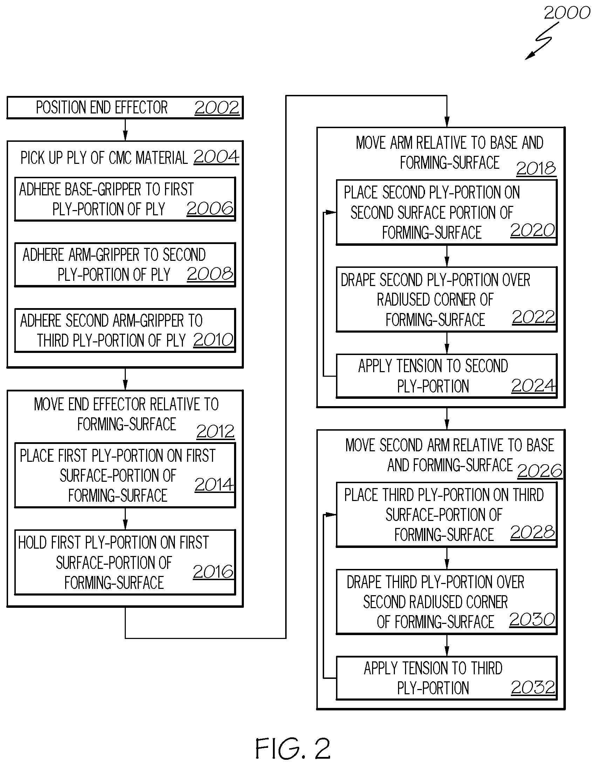

Fig. 1 is a flow diagram illustrating an example of a method 1000 for manufacturing a ceramic matrix composite material 200. Fig. 2 is a flow diagram illustrating an example of a method 2000 for positioning the ceramic matrix composite material 200. In one or more examples, the method 2000 forms a portion of or is an example of the method 1000 (Fig. 1). Fig. 3 is a schematic block diagram of an example of a system 100 for manufacturing the ceramic matrix composite material 200. Examples of the system 100 are used to implement the method 1000 and/or the method 2000. Generally, the method 1000, the method 2000, and the system 100 are applicable to automated pick-and-place of fabric-based ceramic matrix prepreg, which results in improved part quality and reduced rework.

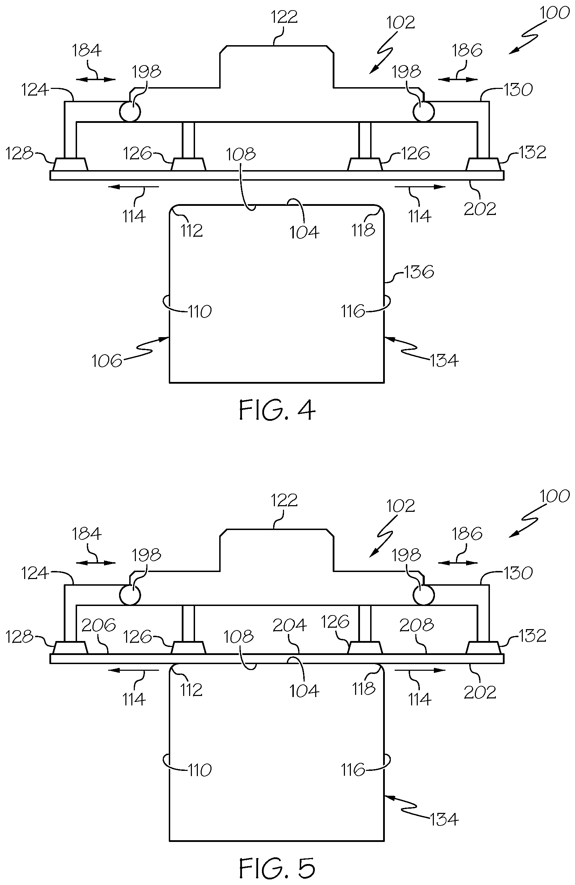

Figs. 4-18 illustrate various examples of the system 100. Figs. 4-18 illustrate the system 100 being used to position a ply 202 of the ceramic matrix composite material 200 on a forming-surface 104. Generally, a plurality of plies 220 (Fig. 3) is placed (e.g., stacked, one on top of the next) on a tool 134 to form a ceramic matrix composite structure 218 (Fig. 3). As such, in one or more examples, the ceramic matrix composite structure 218 includes or is formed by the stacked plurality of plies 220.

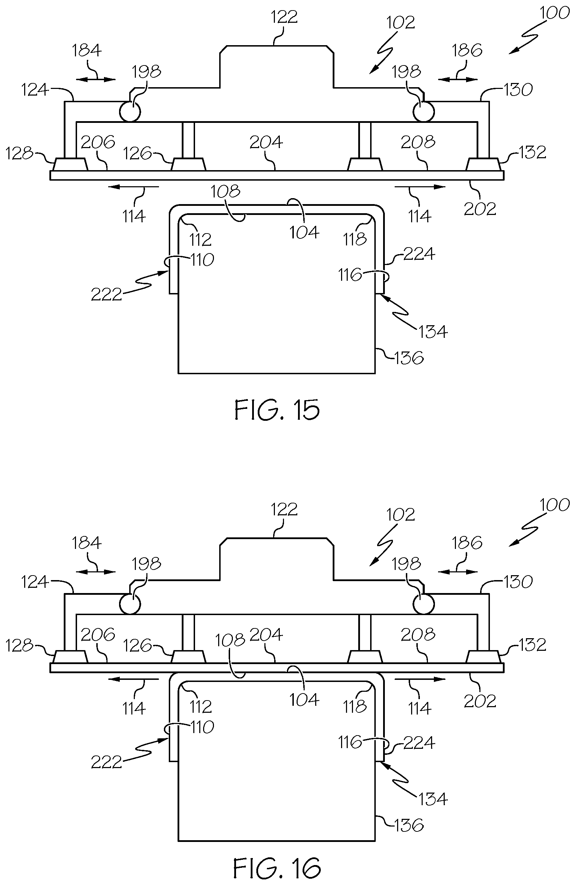

The tool 134 includes or takes the form of any suitable layup tool or mandrel, forming tool or mandrel, compaction tool or mandrel, cure tool or mandrel, and the like. In the examples illustrated in Figs. 4-14, the forming-surface 104 is formed by a tool-surface 136 of the tool 134. In the examples illustrated in Figs. 15-17, the forming-surface 104 is formed by a prior-ply-surface 224 of a prior-ply 222. The prior-ply 222 is a ply of the ceramic matrix composite material 200 that has been previously positioned on the tool 134 or on a previously placed ply and upon which a currently placed ply is positioned, for example, using the system 100. It is noted that the term 'mandrel' as used in the application refers to a mandrel upon which parts, for example aircraft parts, can be positioned. The term mandrel may interchangeably used with the term 'layup mandrel'. The mandrel is provided with and/or used as a surface upon which parts, layers of material or combinations thereof may be positioned. This may for example be a lay-up mandrel or mandrel upon which wing panels and/or wing skins are transported.

The tool 134 can have various configurations and/or geometries, for example, depending on the geometry of the ceramic matrix composite structure 218 being manufactured using the system 100 and/or according to the method 1000 and/or the method 2000. The tool 134 can have any suitable cross-sectional shape (e.g., square, rectangular, circular, elliptical, etc.) and have any suitable cross-sectional geometry. The tool 134 can have a constant cross-sectional shape and/or geometry along its length. Alternatively, the tool 134 can have a variable cross-sectional shape and/or geometry along its length. The tool 134 can have any number of surface portions that define the shape of the ceramic matrix composite structure 218 formed on the tool 134. The surface portions can be planar or contoured. The surface portions can be oriented at various angular orientations relative to each other. The surface portions can have various contours or surface curvatures. The tool 134 can include one or more radiused corners or edges located between different surface portions. The system 100, the method 1000, and the method 2000 facilitate controlled draping of the ply 202 over such radiused corners, edges, or other contoured surface portions during placement of the ply 202.

As illustrated in Figs. 4-18, examples of the system 100 and the methods 1000, 2000 facilitate automated placement of the ply 202 on the forming-surface 104 using an end effector 102. As illustrated in Figs. 4, 9, 12, 15 and 18, the system 100 automatically picks up the ply 202, for example, in a generally flat or planar configuration using the end effector 102. As illustrated in Figs. 5, 10, 13 and 16, the system 100 moves the ply 202 to the forming-surface 104 and places at least a portion of the ply 202 on the forming-surface 104 using the end effector 102. As illustrated in Figs. 3, 11, 14 and 17, the system 100 holds the ply 202 in position on the forming-surface 104 while controllably draping another portion of the ply 202 over the radiused edges or contoured surfaces of the forming-surface 104. As such, examples of the system 100 and the methods 1000, 2000 are applicable to ply-by-ply placing and forming techniques. In one or more examples, steps of placing the ply 202 include a step of selectively orienting the fibers of the ply 202.

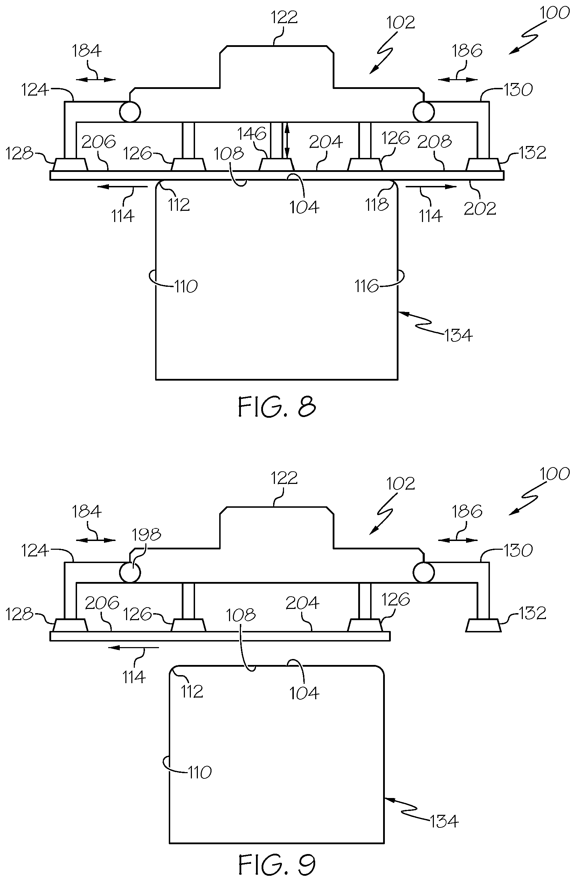

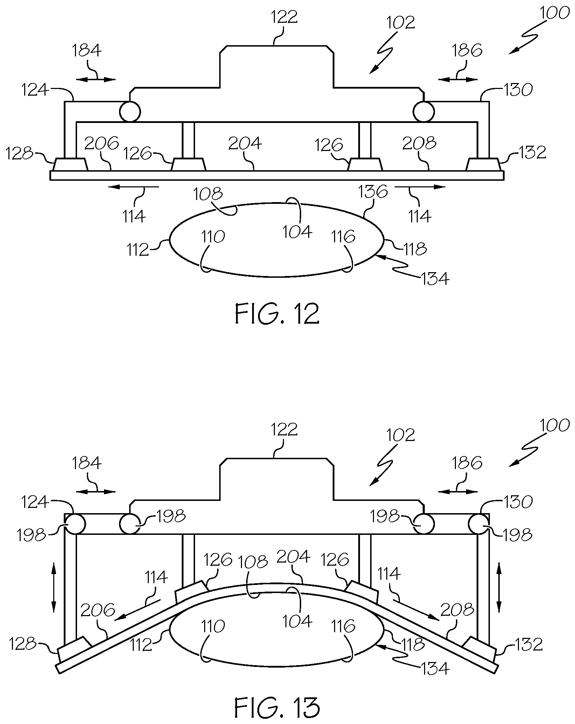

As illustrated in Figs. 4-6 and 15-17, in one or more examples, the system 100 and the methods 1000, 2000 are used to form the ceramic matrix composite structure 218 having a "C"-shape in cross section (e.g., a C-channel). As illustrated in Figs. 8-11, in one or more examples, the system 100 and the methods 1000, 2000 are used to form the ceramic matrix composite structure 218 having a "L"-shape in cross section (e.g., an L-channel). As illustrated in Figs.12-14, in other examples, the system 100 and the methods 1000, 2000 can be used to form the ceramic matrix composite structure 218 having other open cross-sectional shapes. In one or more examples, the system 100 and the methods 1000, 2000 are used to form the ceramic matrix composite structure 218 having a closed cross-sectional shape, such as circular, elliptical, square, rectangular, and the like.

Referring particularly to Fig. 1 and generally to Figs. 3-18, the following are examples of the method 1000, according to the present disclosure. In one or more examples, the method 1000 is implemented using the system 100 or the end effector 102 (e.g., Figs. 3-18). The method 1000 includes a number of elements, steps, and/or operations. Not all of the elements, steps, and/or operations described or illustrated in one example are required in that example. Some or all of the elements, steps, and/or operations described or illustrated in one example can be combined with other examples in various ways without the need to include other elements, steps, and/or operations described in those other examples, even though such combination or combinations are not explicitly described or illustrated by example herein.

In one or more examples, one or more steps of the method 1000 are electronically controlled or computer controlled (e.g., under direction of a computer 168). As such, in one or more examples, the method 1000 is an electronically-controller method or a computer-implemented method.

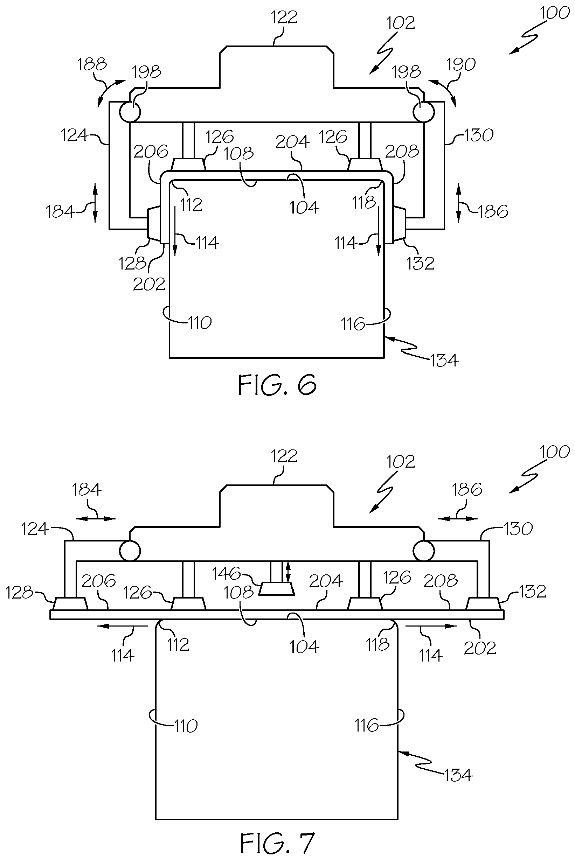

Referring particularly to Fig. 1 and generally to Figs. 3-18, in one or more examples, the method 1000 includes a step of (block 1002) picking up the ply 202 of the ceramic matrix composite material 200. In one or more examples, the ply 202 is picked up using the end effector 102 (e.g., Figs. 4, 9, 12 and 15). The method 1000 includes a step of (block 1004) moving the ply 202 to the forming-surface 104. In one or more examples, the ply 202 is moved using the end effector 102 (e.g., Figs. 5, 10, 12 and 16). The method 1000 includes a step of (block 1006) conforming the ply 202 to a shape 106 of the forming-surface 104. In one or more examples, the ply 202 is conformed to the shape 106 of the forming-surface 104 using the end effector 102 (e.g., Figs. 6, 11, 14 and 17).

Referring particularly to Fig. 1 and generally to Figs. 3, 6, 11, 14 and 17, in one or more examples, the conforming step (block 1006) includes a step of (block 1012) forming the ply 202 over a radiused corner 112 of the forming-surface 104.

Referring particularly to Fig. 1 and generally to Figs. 3, 6, 14 and 17, in one or more examples, the conforming step (block 1006) includes a step of (block 1018) forming the ply 202 over a second radiused corner 118 of the forming-surface 104.

The forming-surface 104 can have any one of various shapes (e.g., shape 106). Generally, the shape 106 of the forming-surface 104 is defined by the cross-sectional shape of the tool 134. As examples, the tool 134 and, thus, the forming-surface 104, can have a square shape in cross section, a circular shape in cross section, an elliptical shape in cross section, or other shape. The forming-surface 104 can be formed by a portion of or an entirety of the tool 134.

Referring particularly to Fig. 1 and generally to Figs. 3-17, in one or more examples, the conforming step (block 1006) includes a step of (block 1008) placing a first ply-portion 204 of the ply 202 on a first surface-portion 108 of the forming-surface 104. In one or more examples, the first ply-portion 204 is placed on the first surface-portion 108 using the end effector 102 (e.g., Fig. 5, 10, 13 and 16). The conforming step (block 1006) includes a step of (block 1016) placing a second ply-portion 206 of the ply 202 on a second surface-portion 110 of the forming-surface 104. In one or more examples, the second ply-portion 206 is placed on the second surface-portion 110 using the end effector 102 (e.g., Figs. 6, 11, 14 and 17). In one or more examples, the first surface-portion 108 and the second surface-portion 110 are non-coplanar (e.g., Figs. 4-18).

Referring to Figs. 4-11 and 15-17, in one or more examples, according to the method 1000, the first surface-portion 108 and the second surface-portion 110 of the forming-surface 104 are at least approximately perpendicular to each other. In these examples, the first ply-portion 204 and the second ply-portion 206 are positioned at least approximately perpendicular to each other on the forming-surface 104 such that a first portion and a second portion of the ceramic matrix composite structure 218 are at least approximately perpendicular to each other (e.g., a C-channel, an L-channel, and the like).

Referring to Figs. 12-14, in one or more examples, according to the method 1000, the first surface-portion 108 and the second surface-portion 110 of the forming-surface 104 are at non-perpendicular and non-parallel to each other. In these examples, the first ply-portion 204 and the second ply-portion 206 are positioned non-perpendicular and non-parallel (e.g., oblique) to each other on the forming-surface 104 such that a first portion and a second portion of the ceramic matrix composite structure 218 are non-perpendicular and non-parallel to each other.

Referring particularly to Fig. 1 and generally to Figs. 3-17, in one or more examples, the conforming step (block 1006) includes a step of (block 1010) holding the first ply-portion 204 of the ply 204 on the first surface-portion 108 of the forming-surface 104. In one or more examples, the first ply-portion 204 is held in place on the first surface-portion 108 using the end effector 102 (e.g., Figs. 5, 7, 10 and 13). The conforming step (block 1006) also includes a step of (block 1016) draping the second ply-portion 206 of the ply 204 over the radiused corner 112, or radiused edge, of the forming-surface 104 between the first surface-portion 108 and the second surface-portion 110 of the forming-surface 104. In one or more examples, the second ply-portion 206 is draped over the radiused corner 112 using the end effector 102 (e.g., Fig. 6, 11, 14 and 17). In one or more examples, the step of (block 1014) draping the second ply-portion 206 over the radiused corner 112 is performed before or during the step of (block 1016) placing the second ply-portion 206 of the ply 202 on the second surface-portion 110.

Referring particularly to Fig. 1 and generally to Figs. 3-17, in one or more examples, the conforming step (block 1006) includes a step of (block 1026) applying tension 114 to the second ply-portion 206 of the ply 202. In one or more examples, the tension 114 is applied using the end effector 102. In one or more examples, the step of (block 1024) applying the tension 114 is performed during the step of (block 1014) draping the second ply-portion 206 over the radiused corner 112 of the forming-surface 104 and the step of (block 1016) placing the second ply-portion 206 on the second surface-portion 110 of the forming-surface 104.

Generally, tension 114 is applied (block 1026) to the ply 202, such as the second ply-portion 206, to enable the controlled draping (block 1014) and placing (block 1016) of the second ply-portion 206 during the ply-forming process. In some examples, tension 114 is applied to the extent necessary to maintain tautness in the ply 202 and/or to minimize slack or drooping of the ply 202 during the ply-forming process. In some examples, tension 114 is not required and, therefore, is not applied.

Referring particularly to Fig. 1 and generally to Figs. 3-6 and 12-17, in one or more examples, the conforming step (block 1006) includes a step of (block 1022) placing a third ply-portion 208 of the ply 202 on a third surface-portion 116 of the forming-surface 104. In one or more examples, the third ply-portion 208 is placed on the third surface-portion 116 using the end effector 102 (e.g., Figs. 6, 14 and 17). In one or more examples, the first surface-portion 108 and the third surface-portion 116 are non-coplanar.

Referring to Figs. 4-6 and 12-17, in one or more examples, according to the method 1000, the first surface-portion 108 and the third surface-portion 116 of the forming-surface 104 are at least approximately perpendicular to each other. In these examples, the first ply-portion 204 and the third ply-portion 208 are positioned at least approximately perpendicular to each other on the forming-surface 104 such that a first portion and a second portion of the ceramic matrix composite structure 218 are at least approximately perpendicular to each other (e.g., a C-channel, an L-channel, and the like).

Referring to Figs. 4-6 and 12-17, in one or more examples, according to the method 1000, the second surface-portion 110 and the third surface-portion 116 of the forming-surface 104 are at least approximately parallel to each other. In these examples, the second ply-portion 206 and the third ply-portion 208 are positioned at least approximately parallel to each other on the forming-surface 104 such that a second portion and a third portion of the ceramic matrix composite structure 218 are at least approximately parallel to each other (e.g., a C-channel).

Referring particularly to Fig. 1 and generally to Figs. 3-6 and 12-17, in one or more examples, the conforming step (block 1006) includes a step of (block 1020) draping the third ply-portion 208 of the ply 204 over the second radiused corner 118, or radiused edge, of the forming-surface 104 between the first surface-portion 108 and the third surface-portion 116 of the forming-surface 104. In one or more examples, the third ply-portion 208 is draped over the second radiused corner 118 using the end effector 102 (e.g., Figs. 6, 14 and 17). In one or more examples, the step of (block 1020) draping the third ply-portion 208 over the second radiused corner 118 is performed before or during the step of (block 1022) placing the third ply-portion 208 of the ply 202 on the third surface-portion 116.

Referring particularly to Fig. 1 and generally to Figs. 3-17, in one or more examples, the conforming step (block 1006) includes a step of (block 1028) applying tension 114 to the third ply-portion 208 of the ply 202. In one or more examples, tension 114 is applied to the third ply-portion 208 using the end effector 102. In one or more examples, the step of (block 1028) applying the tension 114 is performed during the step of (block 1020) draping the third ply-portion 208 over the second radiused corner 118 of the forming-surface 104 and the step of (block 1022) placing the third ply-portion 208 on the third surface-portion 116 of the forming-surface 104.

Generally, tension 114 is applied (block 1028) to the ply 202, such as the third ply-portion 208, to enable the controlled draping (block 1020) and placing (block 1022) of the third ply-portion 208 during the ply-forming process. In some examples, tension 114 is applied to the extent necessary to maintain tautness in the ply 202 and/or to minimize slack or drooping of the ply 202 during the ply-forming process. In some examples, tension 114 is not required and, therefore, is not applied.

Referring particularly to Fig. 1 and generally to Figs. 3-17, in one or more examples, the method 1000 includes a step of (block 1024) applying tension 114 to the ply 202. In one or more examples, tension 114 is applied to the ply 202 using the end effector 102. In one or more examples, the step of (block 1024) applying tension 114 is performed during the step of (block 1006) conforming the ply 202 to the forming-surface 104. In one or more examples, the step of (block 1026) applying tension 114 to the second ply-portion 206 and the step of (block 1028) applying tension 114 to the third ply-portion 208 are examples of the step of (block 1024) applying tension 114.

Referring particularly to Fig. 1, in one or more examples, the method 1000 includes a step of (block 1030) detecting tension 114 applied to the ply 202. In one or more examples, tension 114 applied to the ply 202 is detected using the end effector 102.

Referring particularly to Fig. 1 and generally to Figs. 3, in one or more examples, the method 1000 includes a step of (block 1034) compacting the ply 202 on the forming-surface 104 and across the radiused corner 112. In one or more examples, the ply 202 is compacted on the forming-surface 104 using a roller 120 (Fig. 3). The roller 120 can be a manual roller or an at least partially automated roller, such as integrated with the end effector 102 or with a separate, dedicated compacting end effector.

Referring particularly to Fig. 1 and generally to Figs. 3, 7 and 8, in one or more examples, the method 1000 includes a step of (block 1032) tacking the ply 202 to the forming-surface 104. In one or more examples, the step of (block 1032) tacking the ply 202 is performed before the step of (block 1034) compacting the ply 202. In one or more examples, the tacking step (block 1032) is performed using a tacking head 146, which is selectively actuated to press the ply 202 against the forming-surface 104 at one or more tacking locations.

Referring particularly to Fig. 1 and generally to Figs. 3-18, in one or more examples, the end effector 102 includes a base 122, an arm 124, a base-gripper 126, and an arm-gripper 128. The arm 124 is coupled to the base 122. The arm 124 is movable relative to the base 122. The base-gripper 126 is coupled to the base 122. The arm-gripper 128 is coupled to the arm 124. The step of (block 1002) picking up the ply 202 includes a step of adhering the base-gripper 126 to the first ply-portion 204 of the ply 202 and a step of adhering the arm-gripper 128 to the second ply-portion 206 of the ply 202. The step of (block 1006) conforming the ply 202 includes a step of moving the end effector 102 relative to the forming-surface 104 such that the first ply-portion 204 of the ply 202 is placed on the first surface-portion 108 of the forming-surface 104 and a step of moving the arm 124 relative to the base 122 and to the forming-surface 104 such that the second ply-portion 206 is placed on the second surface-portion 110 of the forming-surface 104. In one or more examples, the first surface-portion 108 and the second surface-portion 110 are non-coplanar.

Referring particularly to Fig. 1 and generally to Figs. 3-17, in one or more examples, the conforming step (block 1006) includes a step of holding the first ply-portion 204 on the first surface-portion 108 using the base 122 and the base-gripper 126. In one or more examples, the conforming step (block 1006) also includes a step of moving the arm 124 relative to the base 122 and to the forming-surface 104 such that the second ply-portion 206 is draped over the radiused corner 112 of the forming-surface 104 between the first surface-portion 108 and the second surface-portion 110 of the forming-surface 104.

Referring particularly to Fig. 1 and generally to Figs. 3-17, in one or more examples, the conforming step (block 1006) includes a step of moving the arm 124 relative to the base 122 such that tension 114 is applied to the second ply-portion 206 of the ply 202.

Referring particularly to Fig. 1, in one or more examples, the step of adhering the base-gripper 126 and the arm-gripper 128 to the ply 202 includes a step of applying a vacuum to the ply 202.

Referring particularly to Fig. 1 and generally to Figs. 3-18, in one or more examples, the end effector 102 also includes a second arm 130 and a second arm-gripper 132. The second arm 130 is coupled to the base 122. The second arm 130 is movable relative to the base 122. The second arm-gripper 132 is coupled to the second arm 130. The step of (block 1002) picking up the ply 202 also includes a step of adhering the second arm-gripper 132 to the third ply-portion 208 of the ply 202. The step of (block 1006) conforming the ply 202 also includes a step of moving the second arm 130 relative to the base 122 and to the forming-surface 104 such that the third ply-portion 208 is placed on the third surface-portion 116 of the forming-surface 104. In one or more examples, the first surface-portion 108 and the third surface-portion 116 are non-coplanar.

In examples of the end effector 102 having the second arm 130, the arm 124 may be referred to as a first arm. In examples of the end effector 102 having the second arm 130, the arm-gripper 128 may be referred to as a first arm-gripper.

Referring particularly to Fig. 1 and generally to Figs. 3-8 and 12-17, in one or more examples, the conforming step (block 1006) includes a step of holding the first ply-portion 204 on the first surface-portion 108 using the base 122 and the base-gripper 126. In one or more examples, the conforming step (block 1006) also includes a step of moving the second arm 130 relative to the base 122 and to the forming-surface 104 such that the third ply-portion 208 is draped over the second radiused corner 118 of the forming-surface 104 between the first surface-portion 108 and the third surface-portion 116 of the forming-surface 104.

Referring particularly to Fig. 1 and generally to Figs. 3-8 and 12-17, in one or more examples, the conforming step (block 1006) includes a step of moving the second arm 130 relative to the base 122 such that tension 114 is applied to the third ply-portion 208 of the ply 202.

Referring particularly to Fig. 1 and generally to Figs. 3-14, in one or more examples, the forming-surface 104 includes or is formed by at least a portion of the tool-surface 136 of the tool 134.

Referring particularly to Fig. 1 and generally to Figs. 15-17, in one or more examples, the forming-surface 104 includes or is formed by at least a portion of the prior-ply-surface 224 of the prior-ply 222 of the ceramic matrix composite material 200.

Referring particularly to Fig. 2 and generally to Figs. 3-18, the following are examples of a method 2000 for positioning the ceramic matrix composite material 200, for example, during manufacture of the ceramic matrix composite structure 218, according to the present disclosure. In one or more examples, the method 2000 is implemented using the system 100 or the end effector 102 (e.g., Figs. 3-18). In one or more examples, the method 2000 forms a portion of or is included by the method 1000 (e.g., Fig. 1). The method 2000 includes a number of elements, steps, and/or operations. Not all of the elements, steps, and/or operations described or illustrated in one example are required in that example. Some or all of the elements, steps, and/or operations described or illustrated in one example can be combined with other examples in various ways without the need to include other elements, steps, and/or operations described in those other examples, even though such combination or combinations are not explicitly described or illustrated by example herein.

In one or more examples, one or more steps of the method 2000 are electronically controlled or computer controlled (e.g., under direction of the computer 168). As such, in one or more examples, the method 2000 is an electronically-controller method or a computer-implemented method.

Referring particularly to Fig. 1 and generally to Figs. 3-18, in one or more examples, the method 2000 includes a step of (block 2002) positioning the end effector 102 relative to the ply 202 of the ceramic matrix composite material 200. The end effector 102 includes the base 122. The end effector 102 includes the arm 124 that is coupled to and movable relative to the base 122. The end effector 102 includes the base-gripper 126 that is coupled to the base 122. The end effector 102 includes the arm-gripper 128 that is coupled to the arm 124. The method 2000 includes a step of (block 2004) picking up the ply 202 of the ceramic matrix composite material 200 using the end effector 102. The method 2000, such as the step of (block 2004) picking up the ply 202, includes a step of (block 2006) adhering the base-gripper 126 to the first ply-portion 204 of the ply 202 and a step of (block 2008) adhering the arm-gripper 128 to the second ply-portion 206 of the ply 202. The method 2000 includes a step of (block 2012) moving the end effector 102 relative to a forming-surface 104 such that the first ply-portion 204 of the ply 202 is placed on a first surface-portion 108 of the forming-surface 104 (block 2014). The method 2000 includes a step of (block 2018) moving the arm 124 relative to the base 122 and to the forming-surface 104 such that the second ply-portion 206 is placed on the second surface-portion 110 of the forming-surface 104 (block 2020). In one or more examples, the first surface-portion 108 and the second surface-portion 110 are non-coplanar.

Referring particularly to Fig. 1 and generally to Figs. 3-17, in one or more examples, the method 2000 includes a step of (block 2016) holding the first ply-portion 204 on the first surface-portion 108. As an example, the end effector 102 is moved relative to the forming-surface 104 (block 2012) such that the first ply-portion 204 of the ply 202 is held on the first surface-portion 108 of the forming-surface 104 (block 2016) using the base 122 and the base-gripper 126. The method 2000 includes a step of (block 2022) draping the second ply-portion 206 over the radiused corner 112 of the forming-surface 104 between the first surface-portion 108 and the second surface-portion 110 of the forming-surface 104. As an example, the arm 124 is moved relative to the base 122 and to the forming-surface 104 (block 2018) such that the second ply-portion 206 is draped over the radiused corner 112 of the forming-surface 104 between the first surface-portion 108 and the second surface-portion 110 of the forming-surface 104 (block 2022).

Referring particularly to Fig. 1 and generally to Figs. 3-17, in one or more examples, the method 2000 includes a step of (block 2024) applying tension 114 to the second ply-portion 206. As an example, the arm 124 is moved relative to the base 122 (block 2018) such that tension 114 is applied to the second ply-portion 206 of the ply 202 (block 2024).

Referring particularly to Fig. 1 and generally to Figs. 3-8 and 12-17, in one or more examples, the method 2000, such as the step of (block 2004) picking up the ply 202, includes a step of (block 2010) adhering the second arm-gripper 132 to the third ply-portion 208 of the ply 202.

Referring particularly to Fig. 1 and generally to Figs. 3-8 and 12-17, in one or more examples, the method 2000 includes a step of (block 2026) moving the second arm 130 relative to the base 122 and to the forming-surface 104 such that the third ply-portion 208 is placed on the third surface-portion 116 of the forming-surface 104 (block 2028). In one or more examples, the first surface-portion 108 and the third surface-portion 116 are non-coplanar.

Referring particularly to Fig. 1 and generally to Figs. 3-17, in one or more examples, the method 2000 includes a step of (block 2016) holding the first ply-portion 204 on the first surface-portion 108. As an example, the end effector 102 is moved relative to the forming-surface 104 (block 2012) such that the first ply-portion 204 of the ply 202 is held on the first surface-portion 108 of the forming-surface 104 (block 2016) using the base 122 and the base-gripper 126. The method 2000 includes a step of (block 2030) draping the third ply-portion 208 over the second radiused corner 118 of the forming-surface 104 between the first surface-portion 108 and the third surface-portion 116 of the forming-surface 104. As an example, the second arm 130 is moved relative to the base 122 and to the forming-surface 104 (block 2026) such that the third ply-portion 208 is draped over the second radiused corner 118 of the forming-surface 104 between the first surface-portion 108 and the third surface-portion 116 of the forming-surface 104 (block 2030).

Referring particularly to Fig. 1 and generally to Figs. 3-17, in one or more examples, the method 2000 includes a step of (block 2032) applying tension 114 to the third ply-portion 208. As an example, the second arm 130 is moved relative to the base 122 (block 2026) such that tension 114 is applied to the third ply-portion 208 of the ply 202 (block 2032).

Referring to Figs. 1 and 2, in one or more examples, the method 1000, such as the moving step (e.g., block 1004) and/or the placing steps (e.g., blocks 1008, 1016 and 1022) of the method 1000, and the method 2000, such as the moving step (e.g., block 2012) and/or the placing steps (e.g., blocks 2014, 2020 and 2028) of the method 2000, include a step of selectively orienting the ply 202 relative to another one of the plies 220. In one or more examples, the ceramic reinforcement 210 of each one of the plies 220 has a fiber orientation (e.g., fabric weave) of the reinforcement material. The orientation of the fibers of the ceramic reinforcement 210 can be unidirectional, random, bidirectional, and multi-directional. In one or more examples, the moving and/or placing steps include a step of selectively orienting the fibers (e.g., selecting the fiber orientation) of the ceramic reinforcement 210 of the ply 202 relative to the fiber orientation of the prior-ply 222 or another previously placed one of the plies 220.

Referring now to Figs. 2-8, the following are examples of a system 100 for manufacturing the ceramic matrix composite structure 218, according to the present disclosure. In one or more examples, the system 100 utilizes the end effector 102 for positioning (e.g., picking-and-placing) the ply 202 of the ceramic matrix composite material 200. The system 100 includes a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

Referring to Fig. 3-18, in one or more examples, the system 100 includes a robotic manipulator 142. The system 100 includes the end effector 102. The end effector 102 is coupled to the robotic manipulator 142. The end effector 102 includes the base 122. The end effector 102 includes the arm 124 that is coupled to and movable relative to the base 122. The end effector 102 includes the base-gripper 126 that is coupled to the base 122. The end effector 102 includes the arm-gripper 128 that is coupled to the arm 124. The base-gripper 126 and the arm-gripper 128 hold the ply 202 of the ceramic matrix composite material 200. The robotic manipulator 142 moves the ply 202 relative to the forming-surface 104 such that the first ply-portion 204 is placed on the first surface-portion 108 of the forming-surface 104. The arm 124 moves relative to the base 122 and relative to the forming-surface 104 such that the second ply-portion 206 of the ply 202 is placed on the second surface-portion 110 of the forming-surface 104.

Referring to Fig. 3, in one or more examples, the robotic manipulator 142 is any suitable programmable platform that is configured to move and position the end effector 102 in three-dimensional space, for example, under direction from the computer 168. The robotic manipulator 142 includes various operation components, such as motors, actuators, articulating joints, encoders, and the like. Examples of the robotic manipulator 142 include a robotic arm, an overhead gantry, and the like, such as linkages, cams, levers, and various other mechanically induced motion devices.

Referring to Figs. 3-17, in one or more examples, the base 122 of the end effector 102 holds the first ply-portion 204 of the ply 204 on the first surface-portion 108 of the forming-surface 104. The arm 124 moves relative to the base 122 and relative to the forming-surface 104 such that the second ply-portion 206 of the ply 204 is draped over the radiused corner 112 of the forming-surface 104 between the first surface-portion 108 and the second surface-portion 110 of the forming-surface 104.

Referring to Figs. 3-17, in one or more examples, the arm 124 is linearly movable relative to the base 122. In one or more examples, the arm 124 moves relative to the base 122 such that tension 114 is applied to the second ply-portion 206 of the ply 202. In one or more examples, the arm 124 moves linearly (e.g., inward and outward) relative to the base 122, for example, in the directions of directional arrow 184. Linear movement of the arm 124 relative to the base 122, while the ply 202 is gripped by the base-gripper 126 and the arm-gripper 128, applies tension 114 to the second ply-portion 206. The end effector 102 includes any suitable combination of operational components that is configured to drive and control linear movement of the arm 124 relative to the base 122, such as motors, actuators, transmissions, gears, and the like.

Referring to Figs. 3-18, in one or more examples, the arm 124 is rotationally movable relative to the base 122. In one or more examples, the arm 124 moves rotationally relative to the base 122, for example, in the directions of directional arrow 188. Rotational movement of the arm 124 relative to the base 122, while the ply 202 is gripped by the base-gripper 126 and the arm-gripper 128, places the second ply-portion 206 on the second surface-portion 110 of the forming-surface 104 while draping the second ply-portion 206 over the radiused corner 112. The end effector 102 includes any suitable combination of operational components that is configured to drive and control rotary movement of the arm 124 relative to the base 122, such as motors, actuators, transmissions, gears, and the like.

In one or more examples, the arm 124 moves linearly relative to the base 122, for example, in the directions of directional arrow 184, while the arm 124 moves rotationally relative to the base 122, for example, in the directions of directional arrow 188. Linear movement and rotational movement of the arm 124 relative to the base 122, while the ply 202 is gripped by the base-gripper 126 and the arm-gripper 128, applies tension 114 to the second ply-portion 206 while the second ply-portion 206 is draped over the radiused corner 112 and placed on the second surface-portion 110.

Referring to Figs. 3-18, in one or more examples, the end effector 102 includes the second arm 130 that is coupled to and movable relative to the base 122. The end effector 102 includes the second arm-gripper 132 that is coupled to the second arm 130. The second arm-gripper 132 holds the ply 202. The second arm 130 moves relative to the base 122 and relative to the forming-surface 104 such that the third ply-portion 208 of the ply 202 is placed on the third surface-portion 116 of the forming-surface 104.

Referring to Figs. 3-8 and12-17, in one or more examples, the second arm 130 moves relative to the base 122 and relative to the forming-surface 104 such that the third ply-portion 208 of the ply 204 is draped over the second radiused corner 118 of the forming-surface 104 between the first surface-portion 108 and the third surface-portion 116 of the forming-surface 104.

Referring to Figs. 3-8 and 12-17 in one or more examples, the arm 124 and the second arm 130 are linearly movable relative to the base 122. In one or more examples, the arm 124 and the second arm 130 move relative to the base 122 such that tension 114 is applied to the second ply-portion 206 and the third ply-portion 208 of the ply 204. In one or more examples, the arm 124 moves relative to the base 122 such that tension 114 is applied to the second ply-portion 206 of the ply 202 and the second arm 130 moves relative to the base 122 such that tension 114 is applied to the third ply-portion 208 of the ply 202. In one or more examples, the arm 124 moves linearly (e.g., inward and outward) relative to the base 122, for example, in the directions of directional arrow 184. In one or more examples, the second arm 130 moves linearly (e.g., inward and outward) relative to the base 122, for example, in the directions of directional arrow 186. Linear movement of the arm 124 and the second arm 130 relative to the base 122, while the ply 202 is gripped by the base-gripper 126, the arm-gripper 128, and the second arm-gripper 132, applies tension 114 to the second ply-portion 206 and the third ply-portion 208. The end effector 102 includes any suitable combination of operational components that is configured to drive and control linear movement of the arm 124 and the second arm 130 relative to the base 122, such as motors, actuators, transmissions, gears, and the like.

Referring to Fig. 3, in one or more examples, the system 100 includes a sensor 144. The sensor 144 detects (e.g., is configured to detect) tension 114 applied to the ply 202, such as tension 114 applied to at least one of the second ply-portion 206 and/or the third ply-portion 208 of the ply 204. In one or more examples, data or measurements from the sensor 144 are transmitted to a feedback controller (e.g., of the computer 168) and are used to direct movement of the arm 124 and/or the second arm 130.

Referring to Figs. 3-18, in one or more examples, the arm 124 and the second arm 130 are rotationally movable relative to the base 122. In one or more examples, the arm 124 moves rotationally relative to the base 122, for example, in the directions of directional arrow 188. In one or more examples, the second arm 130 moves rotationally relative to the base 122, for example, in the directions of directional arrow 190. Rotational movement of the arm 124 and the second arm 130 relative to the base 122, while the ply 202 is gripped by the base-gripper 126 and the arm-gripper 128, places the second ply-portion 206 on the second surface-portion 110 of the forming-surface 104 while draping the second ply-portion 206 over the radiused corner 112 and places the third ply-portion 208 on the third surface-portion 116 of the forming-surface 104 while draping the third ply-portion 208 over the second radiused corner 118. The end effector 102 includes any suitable combination of operational components that is configured to drive and control rotary movement of the arm 124 and the second arm 130 relative to the base 122, such as motors, actuators, transmissions, gears, and the like.

In one or more examples, the arm 124 moves linearly relative to the base 122, for example, in the directions of directional arrow 184, while the arm 124 moves rotationally relative to the base 122, for example, in the directions of directional arrow 188. In one or more examples, the second arm 130 moves linearly relative to the base 122, for example, in the directions of directional arrow 186, while the second arm 130 moves rotationally relative to the base 122, for example, in the directions of directional arrow 190. Linear movement and rotational movement of the arm 124 and the second arm 130 relative to the base 122, while the ply 202 is gripped by the base-gripper 126, the arm-gripper 128, and the second arm-gripper 132, applies tension 114 to the second ply-portion 206 while the second ply-portion 206 is draped over the radiused corner 112 and placed on the second surface-portion 110 and applies tension 114 to the third ply-portion 208 while the third ply-portion 208 is draped over the second radiused corner 118 and placed on the third surface-portion 116.

Referring to Figs. 3-18, in one or more examples, the base-gripper 126 is movable relative to the base 122. In one or more examples, the base-gripper 126 is linearly movable relative to the base 122. Linear movement of the base-gripper 126 relative to the base 122 enables the base-gripper 126 to be selectively and controllably positioned relative to the ply 202 and the forming-surface 104 during pick-up and placement of the ply 202. The end effector 102 includes any suitable combination of operational components that is configured to drive and control rotary movement of the base-gripper 126 relative to the base 122, such as motors, actuators, transmissions, gears, and the like.

Referring to Figs. 3-18, in one or more examples, the arm-gripper 128 is movable relative to the arm 124. In one or more examples, the arm-gripper 128 is linearly movable relative to the arm 124. Linear movement of the arm-gripper 128 relative to the arm 124 enables the arm-gripper 128 to be selectively and controllably positioned relative to the ply 202 and the forming-surface 104 during pick-up and placement of the ply 202. Linear movement of the arm-gripper 128 relative to the arm 124 can also be used for applying tension 114 to the second ply-portion 206 of the ply 202. The end effector 102 includes any suitable combination of operational components that is configured to drive and control rotary movement of the arm-gripper 128 relative to the arm 124, such as motors, actuators, transmissions, gears, and the like.

Referring to Figs. 3-18, in one or more examples, the second arm-gripper 132 is movable relative to the second arm 130. In one or more examples, the second arm-gripper 132 is linearly movable relative to the second arm 130. Linear movement of the second arm-gripper 132 relative to the second arm 130 enables the second arm-gripper 132 to be selectively and controllably positioned relative to the ply 202 and the forming-surface 104 during pick-up and placement of the ply 202. Linear movement of the second arm-gripper 132 relative to the second arm 130 can also be used for applying tension 114 to the third ply-portion 208 of the ply 202. The end effector 102 includes any suitable combination of operational components that is configured to drive and control rotary movement of the second arm-gripper 132 relative to the second arm 130, such as motors, actuators, transmissions, gears, and the like.

Referring to Fig. 3, in one or more examples, at least one of the base-gripper 126, the arm-gripper 128, and the second arm-gripper 132 includes a vacuum gripper.

Referring to Figs. 3, in one or more examples, at least one of the base-gripper 126, the arm-gripper 128, and the second arm-gripper 132 includes an electrostatic gripper.

Referring to Figs. 3-18, in one or more examples, the system 100 includes the tool 134. The tool 134 includes the tool-surface 136. Movement of the arm 124 relative to the base 122 conforms the ply 202 to the tool-surface 136.

Referring to Figs. 3-14, in one or more examples, the forming-surface 104 is formed by the tool-surface 136. The first surface-portion 108 and the second surface-portion 110 are non-coplanar.

Referring to Figs. 3 and 15-17, in one or more examples, the forming-surface 104 is formed by the prior-ply-surface 224 of the prior-ply 222 of the ceramic matrix composite material 200, which is positioned on the tool 134. The first surface-portion 108 and the second surface-portion 110 are non-coplanar.

Referring to Figs. 3, 6 and 8, in one or more examples, the system 100 includes a tacking head 146. In one or more examples, the end effector 102 includes the tacking head 146. As an example, the tacking head 146 is integrated to the end effector 102. In one or more examples, the tacking head 146 is coupled to the base 122. In one or more examples, the tacking head 146 is movable relative to the base 122. Selective actuation of the tacking head 146 moves the tacking head 146 relative to the base 122 and relative to the forming-surface 104 to compact an area of the first ply-portion 204 on the first surface-portion 108 of the forming-surface 104.

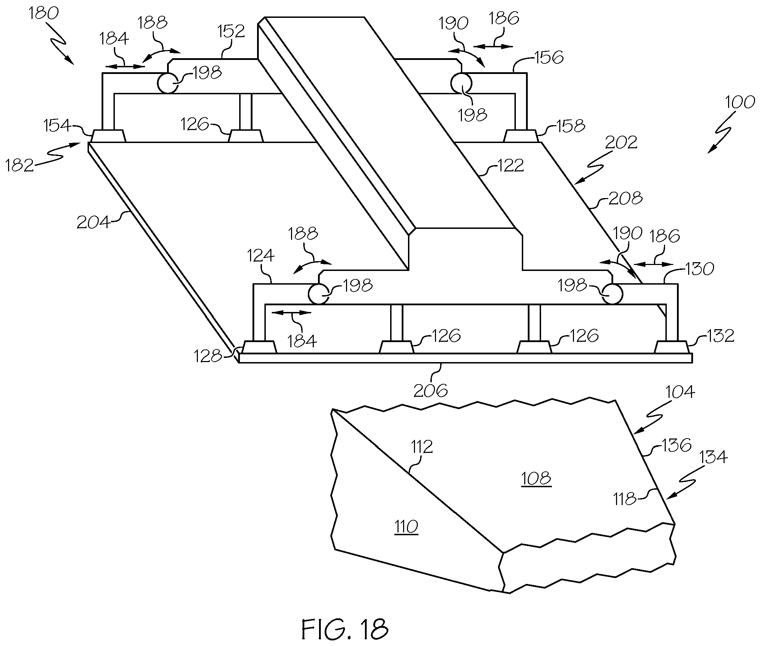

Referring to Fig. 18, in one or more examples, the end effector 102 includes any suitable number of positioning arms 180 that are coupled to and/or that are movable relative to the base 122. In one or more examples, the second arm 130 is positioned opposite the arm 124 relative to the base 122. In one or more examples, the end effector 102 includes a third arm 152 that is coupled to the base 122 and that is spaced away from the arm 124 on the same side of the base 122 as the arm 124. In one or more examples, the end effector 102 includes a fourth arm 156 that is coupled to the base 122, that is spaced away from the base 122 on the same side of the base 122 as the second arm 130, and that is opposite the third arm 152. In these examples, the arm 124 (e.g., first arm), the second arm 130, the third arm 152, the fourth arm 156, and any additional number of arms are examples of the positioning arms 180.

Referring to Fig. 18, in one or more examples, the end effector 102 includes any suitable number of grippers 182. In one or more examples, the arm 124 includes any number of arm-grippers 128. In one or more examples, the second arm 130 includes any number of second arm-grippers 132. In one or more examples, the third arm 152 includes any number of third arm-grippers 154. In one or more examples, the fourth arm 156 includes any number of fourth arm-grippers 158. In one or more examples, the base 122 includes any number of base-grippers 126. In these examples, the base-grippers 126, the arm-grippers 128 (e.g., first arm-grippers), the second arm-grippers 132, the third arm-grippers 154, the fourth arm-grippers 158, and any additional number of grippers are examples of the grippers 182.

Referring to Fig. 18, in one or more examples, the end effector 102 includes a number of joints 198. Each one of the joints 198 enables rotational movement of a corresponding one of the positioning arms 180 relative to the base 122.

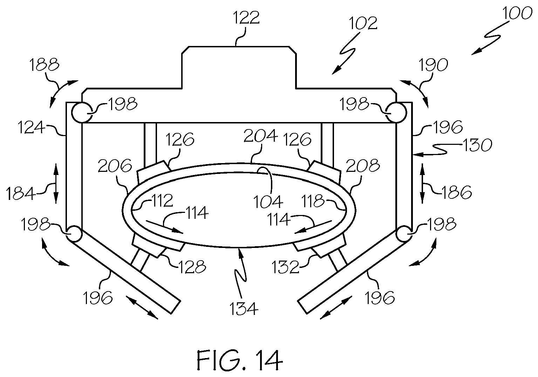

Referring to Fig. 14, in one or more examples, one or more of the positioning arms 180 can include a number of arm-portions 196. One of the arm-portions 196 of a respective one of the positioning arms 180 can be movable (e.g., linearly and/or rotationally) relative to another one of the arm-portions 196, such as about one of the joints 198 of the respective one of the positioning arms 180. Linear and/or rotational movement of the arm-portions 196 relative to each other enable the positioning arms 180 to properly position the ply 202 on the forming-surface 104.

Referring to Fig. 3, in one or more examples, the computer 168 includes a data-processing system 170 configured to received, analyze, generate, and/or transmit various types of data, information, and/or signals, for example, to control or otherwise provide instructions operational components of the system 100 and/or perform the steps of the method 1000. In one or more examples, the data-processing system 170 includes a processor 172 and memory 174 storing instructions (e.g., program code 176) that, when executed, cause the processor 172 to initiate performance of one or more operational steps of the method 1000 or instructs the system 100 to perform one or more operational steps of the method 1000. In one or more examples, the processor 172 is configured to read from and write to the memory 174. In one or more examples, the processor 172 is configured to receive input commands and provide output commands. In one or more examples, the processor 172 is a multi-functional processor such as, for example, a central processing unit. In one or more examples, the functions of the processor 172 are performed by a local processor, a remote processor, or a combination thereof. In one or more examples, the processor 172 is implemented in hardware alone (e.g., a circuit, a microprocessor etc.) have certain aspects in software including firmware alone or can be a combination of hardware and software (including firmware). In one or more examples, the processor 172 can be implemented using instructions that enable hardware functionality, for example, by using executable computer program instructions (e.g., program code 176) in a general-purpose or special-purpose processing unit that is stored on the memory 174 or other computer readable storage medium (e.g., disk, memory, etc.) to be executed by the processor 172. The memory 174 stores a computer program (e.g., program code 176) that includes computer program instructions that control the operation of the processor 172 when loaded into processing circuitry. The computer program instructions provide the logic and routines that enable the processor 172 to perform the method 1000 illustrated in Fig. 2. The processing circuitry, by reading the memory 174, is able to load and execute the program code 176. The program code 176 may arrive at the processor 172 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program. The delivery mechanism may be a signal configured to reliably transfer the computer program. The apparatus may propagate or transmit the computer program as a computer data signal. Although the memory 174 is illustrated as a single component it may be implemented as one or more separate components some or all of which may be integrated/removable and/or may provide permanent/semi-permanent/dynamic/cached storage. References to "computer-readable storage medium," "computer program product," "tangibly embodied computer program," etc. or a "controller," "computer," "processor," etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

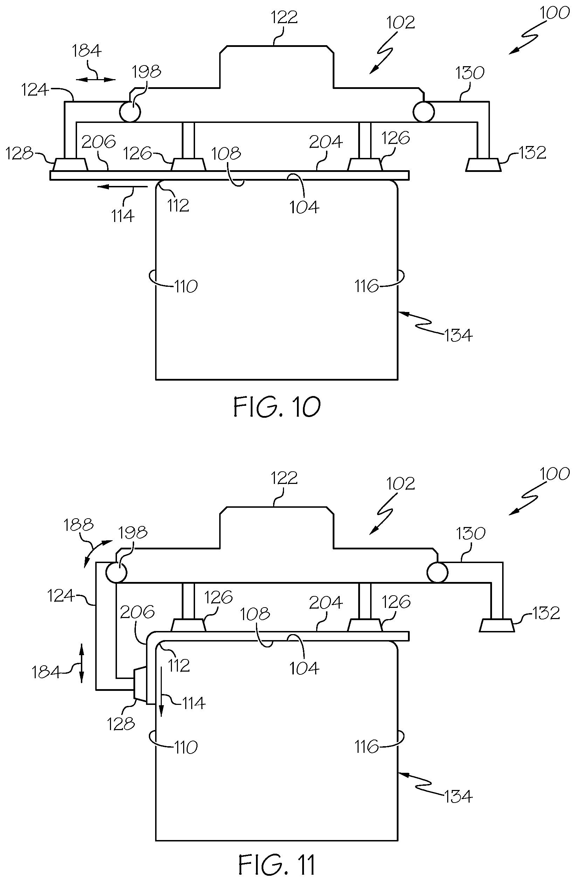

Referring now to Figs. 10 and 11, examples of the method 1000 and the system 100 described herein, may be related to, or used in the context of, the aerospace manufacturing and service method 1100, as shown in the flow diagram of Fig. 10 and an aircraft 1200, as schematically illustrated in Fig. 11. As an example, the aircraft 1200 and/or the manufacturing and service method 1100 may include or utilize components that are manufactured of ceramic matrix composite materials, which are compacted using the system 100 and/or according to the method 1000.

Referring to Fig. 11, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. The aircraft 1200 can have any number of components made of ceramic matrix composite materials, which are compacted using the system 100 and/or according to the method 1000.

Referring to Fig. 10, during pre-production of the aircraft 1200, the manufacturing and service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the manufacturing and service method 1100 illustrated in Fig. 10 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the method 1000 and the system 100, shown and described herein, may be employed during any one or more of the stages of the manufacturing and service method 1100 shown in the flow diagram illustrated by Fig. 10. In an example, components of the aircraft 1200 can be manufactured of ceramic matrix composite materials compacted using the system 100 and/or according to the method 1000 during a portion of component and subassembly manufacturing (block 1106) and/or system integration (block 1108). Further, components of the aircraft 1200 can be manufactured of ceramic matrix composite materials compacted using the system 100 and/or according to the method 1000 while the aircraft 1200 is in service (block 1112). Also, components of the aircraft 1200 can be manufactured of ceramic matrix composite materials compacted using the system 100 and/or according to the method 1000 during system integration (block 1108) and certification and delivery (block 1110). Similarly, components of the aircraft 1200 can be manufactured of ceramic matrix composite materials compacted using the system 100 and/or according to the method 1000 while the aircraft 1200 is in service (block 1112) and during maintenance and service (block 1114).

The preceding detailed description refers to the accompanying drawings, which illustrate specific examples described by the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

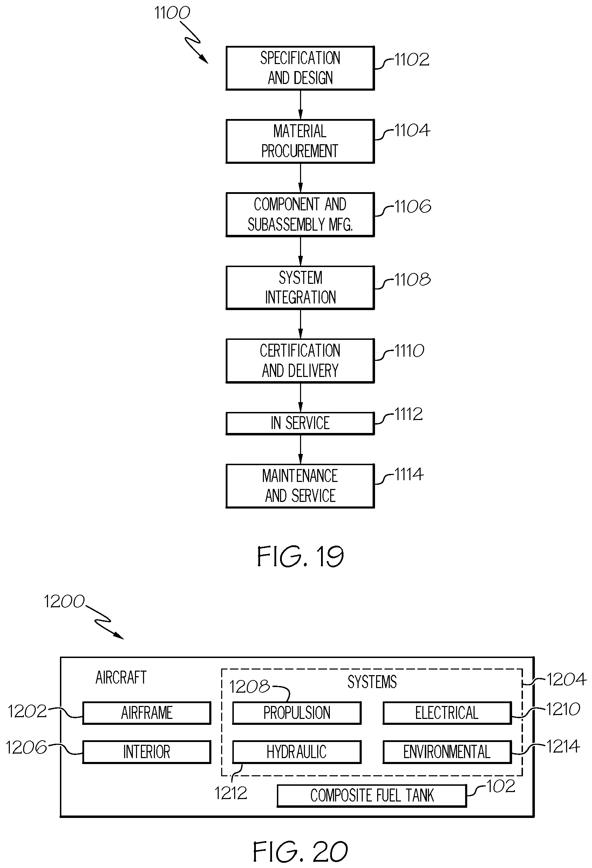

Similarly, additional features not limited to the examples presented, may be combined with some or all of the features shown and described herein. Unless otherwise explicitly stated, the schematic illustrations of the examples depicted in Figs. 3-18 and 20, referred to above, are not meant to imply structural limitations with respect to the illustrative example. Rather, although one illustrative structure is indicated, it is to be understood that the structure may be modified when appropriate within the scope of the appended claims.

Furthermore, elements, features, and/or components that serve a similar, or at least substantially similar, purpose are labeled with like numbers in each of Figs. 3-18 and 20, and such elements, features, and/or components may not be discussed in detail herein with reference to each of Figs. 3-18 and 20. Similarly, all elements, features, and/or components may not be labeled in each of Figs. 3-18 and20, but reference numerals associated therewith may be utilized herein for consistency.

In Figs. 1, 2 and 19, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 1, 2 and 19 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate.

A manufacturing method (1000, 2000) of a ceramic matrix composite structure (218) according to one of the embodiments of the present application (e.g. see Figs. 1-2) comprises the steps of picking up a ply (202) of a ceramic matrix composite material using an end effector (102), moving the ply to a forming-surface (104) using the end effector, and conforming the ply to a shape (106) of the forming-surface using the end effector. Conforming the ply (202) preferably comprises placing a first ply-portion (204) of the ply on a first surface-portion (108) of the forming-surface using the end effector and/or placing a second ply-portion (206) of the ply on a second surface-portion of the forming-surface (110) using the end effector and/or wherein the first surface-portion and the second surface-portion are non-coplanar. This may involve holding the first ply-portion of the ply on the first surface-portion of the forming-surface using the end effector and/or draping the second ply-portion of the ply over a radiused corner (112) of the forming-surface between the first surface-portion and the second surface-portion of the forming-surface using the end effector before placing the second ply-portion of the ply on the second surface-portion.

Applying a tension to the second ply-portion of the ply using the end effector while draping the second ply-portion over the radiused corner of the forming-surface and placing the second ply-portion on the second surface-portion of the forming-surface may be involved when conforming the ply. The same applies to the optional further sub-step of draping a third ply-portion (208) of the ply over a second radiused corner (118) of the forming-surface between the first surface-portion and a third surface-portion (116) of the forming-surface using the end effector before placing the third ply-portion of the ply on the third surface-portion and/or placing the third ply-portion of the ply on the third surface-portion of the forming-surface using the end effector and/or wherein the first surface-portion and the third surface-portion are non-coplanar.

In addition, a tension may also be applied to the third ply-portion of the ply using the end effector while draping the third ply-portion over the second radiused corner of the forming-surface and placing the third ply-portion on the third surface-portion of the forming-surface.

A fiber orientation of a ceramic reinforcement (210) of the ply relative to a prior-ply (222) may be selected to provided further advantages.

The end effector that is used in a method and/or system for manufacturing a ceramic matrix composite structure preferably comprises a base (122), an arm (124) that is coupled to and movable relative to the base, a base-gripper (126) that is coupled to the base, and an arm-gripper (128) that is coupled to the arm, Such end effector can be used when picking up the ply that may involve adhering the base-gripper to a first ply-portion of the ply and adhering the arm-gripper to a second ply-portion of the ply. This may further involve moving the end effector relative to the forming-surface such that the first ply-portion of the ply is placed on a first surface-portion of the forming-surface and moving the arm relative to the base and to the forming-surface such that the second ply-portion is placed on a second surface-portion of the forming-surface, wherein the first surface-portion and the second surface-portion are non-coplanar, to conform the ply. Optionally, as further sub-steps, conforming the ply further comprises holding the first ply-portion on the first surface-portion and moving the arm relative to the base and to the forming-surface such that the second ply-portion is draped over a radiused corner of the forming-surface between the first surface-portion and the second surface-portion of the forming-surface.

The aforementioned end effector (102) can be provided with additional functionality by providing a second arm (130) that is coupled to and movable relative to the base and a second arm-gripper (132) is coupled to the second arm. This enables picking up the ply further comprises adhering the second arm-gripper to a third ply-portion of the ply, and conforming the ply that may further comprise moving the second arm relative to the base and to the forming-surface such that the third ply-portion is placed on a third surface-portion of the forming-surface, and wherein the first surface-portion and the third surface-portion are preferably non-coplanar.

To further improve the manufacturing process, it is a possibility to have conforming the ply further comprising holding the first ply-portion on the first surface-portion and moving the second arm relative to the base and to the forming-surface such that the third ply-portion is draped over a second radiused corner of the forming-surface between the first surface-portion and the third surface-portion of the forming-surface. Optionally, this further involves moving the arm relative to the base such that a tension is applied to the second ply-portion of the ply and moving the second arm relative to the base such that the tension is applied to the third ply-portion of the ply.

It can be advantageous to have the ply of the ceramic matrix composite material comprising a ceramic reinforcement and a ceramic matrix, wherein the ceramic reinforcement comprises at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers, and wherein the ceramic matrix comprises at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix.

Positioning a ceramic matrix composite material preferably involves positioning an end effector in one of the aforementioned embodiments relative to a ply of the ceramic matrix composite material, with the end effector preferably having a base, an arm that is coupled to and movable relative to the base, a base-gripper that is coupled to the base, and an arm-gripper that is coupled to the arm. Positioning may then involve adhering the base-gripper to a first ply-portion of the ply, adhering the arm-gripper to a second ply-portion of the ply, moving the end effector relative to a forming-surface such that the first ply-portion of the ply is placed on a first surface-portion of the forming-surface, and moving the arm relative to the base and to the forming-surface such that the second ply-portion is placed on a second surface-portion of the forming-surface, wherein the first surface-portion and the second surface-portion are preferably non-coplanar. Optionally, this may further involve holding the first ply-portion on the first surface-portion, moving the arm relative to the base such that a tension is applied to the second ply-portion of the ply, and moving the arm relative to the base and to the forming-surface such that the second ply-portion is draped over a radiused corner of the forming-surface between the first surface-portion and the second surface-portion of the forming-surface.

A method (1000) for manufacturing a ceramic matrix composite structure (218) may comprise picking up a ply (202) of a ceramic matrix composite material (200) using an end effector (102), and then moving the ply (202) to a forming-surface (104) using the end effector (102). Using this end effector (102) the ply (202) can be conformed to a shape (106) of the forming-surface (104) using the end effector (102). The end effector (102) may comprise a number of components, such as a base (122), an arm (124) that is coupled to and movable relative to the base (122), a base-gripper (126) that is coupled to the base (122), and an arm-gripper (128) that is coupled to the arm (124). When picking up the ply (202) some adhering steps may be involved, such as adhering the base-gripper (126) to a first ply-portion (204) of the ply (202), and adhering the arm-gripper (128) to a second ply-portion (206) of the ply (202). Conforming the ply (202) involves moving the end effector (102) relative to the forming-surface (104) such that the first ply-portion (204) of the ply (202) is placed on a first surface-portion (108) of the forming-surface (104), and moving the arm (124) relative to the base (122) and to the forming-surface (104) such that the second ply-portion (206) is placed on a second surface-portion (110) of the forming-surface (104), and the first surface-portion (108) and the second surface-portion (110) are non-coplanar. Such method may optionally involve further steps that were described earlier.

Manufacturing a ceramic matrix composite structure involves system (100), wherein the system (e.g. see Fig. 3) is preferably provided with a robotic manipulator (142), and an end effector (102) that is operatively coupled to the robotic manipulator, and wherein the end effector is provided with a base (122), an arm (124) that is coupled to and movable relative to the base, a base-gripper (126) that is coupled to the base, and an arm-gripper (128) that is coupled to the arm, wherein the base-gripper and the arm-gripper are configured for holding a ply (202) of ceramic matrix composite material (200). Such system is preferably capable of having the robotic manipulator moving the ply relative to a forming-surface such that a first ply-portion is placed on a first surface-portion of the forming-surface and the arm moving relative to the base and the forming-surface such that a second ply-portion of the ply is placed on a second surface-portion of the forming-surface. In such system the base of the end effector is preferably configured for holding the first ply-portion of the ply on the first surface-portion of the forming-surface, and is preferably also configured for moving the arm relative to the base and the forming-surface such that the second ply-portion of the ply is draped over a radiused corner of the forming-surface between the first surface-portion and the second surface-portion of the forming-surface. Optionally, the arm moves relative to the base such that a tension is applied to the second ply-portion of the ply. Similar to an earlier described end effector, an end effector that can be applied in such system may comprise a second arm that is coupled to and movable relative to the base, and a second arm-gripper that is coupled to the second arm, wherein the second arm-gripper is configured for holding the ply and/or wherein the second arm is configured for moving relative to the base and the forming-surface such that a third ply-portion of the ply is placed on a third surface-portion of the forming-surface. Optionally, the second arm is configured for moving relative to the base and the forming-surface such that the third ply-portion of the ply is draped over a second radiused corner of the forming-surface between the first surface-portion and the third surface-portion of the forming-surface.

Although various examples of system 100, method 1000, 3000 have been shown and described, modifications may occur to those skilled in the art upon reading the specification. The present application includes such modifications and is limited only by the scope of the claims.

## Claims

1. A method (1000) for manufacturing a ceramic matrix composite structure (218), the method (1000) comprising:
picking up a ply (202) of a ceramic matrix composite material (200) using an end effector (102);
moving the ply (202) to a forming-surface (104) using the end effector (102); and
conforming the ply (202) to a shape (106) of the forming-surface (104) using the end effector (102), wherein:
conforming the ply (202) comprises:
placing a first ply-portion (204) of the ply (202) on a first surface-portion (108) of the forming-surface (104) using the end effector (102); and
placing a second ply-portion (206) of the ply (202) on a second surface-portion (110) of the forming-surface (104) using the end effector (102); and
the first surface-portion (108) and the second surface-portion (110) are non-coplanar, and wherein conforming the ply (202) further comprises:
holding the first ply-portion (204) of the ply (204) on the first surface-portion (108) of the forming-surface (104) using the end effector (102); and
draping the second ply-portion (206) of the ply (204) over a radiused corner (112) of the forming-surface (104) between the first surface-portion (108) and the second surface-portion (110) of the forming-surface (104) using the end effector (102) before placing the second ply-portion (206) of the ply (202) on the second surface-portion (110).

2. The method (1000) of claim 1, wherein conforming the ply (202) further comprises applying a tension (114) to the second ply-portion (206) of the ply (202) using the end effector (102) while draping the second ply-portion (206) over the radiused corner (112) of the forming-surface (104) and placing the second ply-portion (206) on the second surface-portion (110) of the forming-surface (104).

3. The method (1000) of claim 1 or 2, wherein:
conforming the ply (202) further comprises:
draping a third ply-portion (208) of the ply (204) over a second radiused corner (118) of the forming-surface (104) between the first surface-portion (108) and a third surface-portion (116) of the forming-surface (104) using the end effector (102) before placing the third ply-portion (208) of the ply (202) on the third surface-portion (116); and
placing the third ply-portion (208) of the ply (202) on the third surface-portion (116) of the forming-surface (104) using the end effector (102); and
the first surface-portion (108) and the third surface-portion (116) are non-coplanar.

4. The method (1000) of claim 3, wherein conforming the ply (202) further comprises applying a tension (114) to the third ply-portion (208) of the ply (202) using the end effector (102) while draping the third ply-portion (208) over the second radiused corner (118) of the forming-surface (104) and placing the third ply-portion (208) on the third surface-portion (116) of the forming-surface (104).

5. The method (1000) of any of the preceding claims, further comprising selecting a fiber orientation of a ceramic reinforcement (210) of the ply (202) relative to a prior-ply (222).

6. The method (1000) of any of the preceding claims, wherein:
the end effector (102) comprises:
a base (122);
an arm (124) that is coupled to and movable relative to the base (122);
a base-gripper (126) that is coupled to the base (122); and
an arm-gripper (128) that is coupled to the arm (124);
picking up the ply (202) comprises:
adhering the base-gripper (126) to a first ply-portion (204) of the ply (202); and
adhering the arm-gripper (128) to a second ply-portion (206) of the ply (202);
conforming the ply (202) comprises:
moving the end effector (102) relative to the forming-surface (104) such that the first ply-portion (204) of the ply (202) is placed on a first surface-portion (108) of the forming-surface (104); and
moving the arm (124) relative to the base (122) and to the forming-surface (104) such that the second ply-portion (206) is placed on a second surface-portion (110) of the forming-surface (104); and
the first surface-portion (108) and the second surface-portion (110) are non-coplanar.

7. The method (1000) of claim 6, wherein conforming the ply (202) further comprises:
holding the first ply-portion (204) on the first surface-portion (108); and
moving the arm (124) relative to the base (122) and to the forming-surface (104) such that the second ply-portion (206) is draped over a radiused corner (112) of the forming-surface (104) between the first surface-portion (108) and the second surface-portion (110) of the forming-surface (104).

8. The method (1000) of claim 7, wherein:
the end effector (102) further comprises:
a second arm (130) that is coupled to and movable relative to the base (122); and
a second arm-gripper (132) is coupled to the second arm (130);
picking up the ply (202) further comprises adhering the second arm-gripper (132) to a third ply-portion (208) of the ply (202);
conforming the ply (202) further comprises moving the second arm (130) relative to the base (122) and to the forming-surface (104) such that the third ply-portion (208) is placed on a third surface-portion (116) of the forming-surface (104); and
the first surface-portion (108) and the third surface-portion (116) are non-coplanar.

9. The method (1000) of claim 8, wherein conforming the ply (202) further comprises:
holding the first ply-portion (204) on the first surface-portion (108); and
moving the second arm (130) relative to the base (122) and to the forming-surface (104) such that the third ply-portion (208) is draped over a second radiused corner (118) of the forming-surface (104) between the first surface-portion (108) and the third surface-portion (116) of the forming-surface (104).

10. The method (1000) of claim 9, wherein conforming the ply (202) further comprises:
moving the arm (124) relative to the base (122) such that a tension (114) is applied to the second ply-portion (206) of the ply (202); and
moving the second arm (130) relative to the base (122) such that the tension (114) is applied to the third ply-portion (208) of the ply (202).

11. The method (1000) of any of the preceding claims, wherein:
the ply (202) of the ceramic matrix composite material (200) comprises a ceramic reinforcement (210) and a ceramic matrix (212);
the ceramic reinforcement (210) comprises at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers; and
the ceramic matrix (212) comprises at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix.

12. The method (2000) of any of the preceding claims, further comprising the step of positioning a ceramic matrix composite material (200) comprising steps of:
positioning an end effector (102) relative to a ply (202) of the ceramic matrix composite material (200), wherein the end effector (102) comprises:
a base (122);
an arm (124) that is coupled to and movable relative to the base (122);
a base-gripper (126) that is coupled to the base (122); and
an arm-gripper (128) that is coupled to the arm (124);
adhering the base-gripper (126) to a first ply-portion (204) of the ply (202);
adhering the arm-gripper (128) to a second ply-portion (206) of the ply (202);
moving the end effector (102) relative to a forming-surface (104) such that the first ply-portion (204) of the ply (202) is placed on a first surface-portion (108) of the forming-surface (104); and
moving the arm (124) relative to the base (122) and to the forming-surface (104) such that the second ply-portion (206) is placed on a second surface-portion (110) of the forming-surface (104),
wherein the first surface-portion (108) and the second surface-portion (110) are non-coplanar.

13. The method (2000) of claim 12, further comprising:
holding the first ply-portion (204) on the first surface-portion (108);
moving the arm (124) relative to the base (122) such that a tension (114) is applied to the second ply-portion (206) of the ply (202); and
moving the arm (124) relative to the base (122) and to the forming-surface (104) such that the second ply-portion (206) is draped over a radiused corner (112) of the forming-surface (104) between the first surface-portion (108) and the second surface-portion (110) of the forming-surface (104).

14. A system (100) for manufacturing a ceramic matrix composite structure (218), the system (100) comprising:
a tool (134) having a tool surface (136);
a forming surface (104) that is formed by the tool surface (136) or that is formed by at least a portion of a prior-ply-surface (224) of a prior-ply (222) of a ceramic matrix composite material (200), and wherein the forming surface (104) comprises:
at least a first surface-portion (108) and a second surface portion (110); and
a radiused edge (112) between the first surface-portion (108) and the second surface-portion (110) of the forming-surface (104);
in use of the system, at least one ply (202) of a ceramic matrix composite material (200);
a robotic manipulator (142); and
an end effector (102) that is coupled to the robotic manipulator (142), wherein:
the end effector (102) comprises:
a base (122);
an arm (124) that is coupled to and movable relative to the base (122);
a base-gripper (126) that is coupled to the base (122); and
an arm-gripper (128) that is coupled to the arm (124);
the base-gripper (126) and the arm-gripper (128) are configured for holding the ply (202) of ceramic matrix composite material (200);
the robotic manipulator (142) is configured for moving the ply (202) relative to the forming-surface (104) such that a first ply-portion (204) is placed on the first surface-portion (108) of the forming-surface (104); and
the arm (124) is configured for moving relative to the base (122) and the forming-surface (104) such that a second ply-portion (206) of the ply (202) is placed on the second surface-portion (110) of the forming-surface (104).

15. The system (100) of claim 14, wherein:
the base (122) of the end effector (102) is configured for holding the first ply-portion (204) of the ply (204) on the first surface-portion (108) of the forming-surface (104); and
the arm (124) is configured for moving relative to the base (122) and the forming-surface (104) such that the second ply-portion (206) of the ply (204) is draped over the radiused corner (112) of the forming-surface (104) between the first surface-portion (108) and the second surface-portion (110) of the forming-surface (104), and/or
wherein the arm (124) is configured for moving relative to the base (122) such that a tension (114) is applied to the second ply-portion (206) of the ply (204),
wherein preferably:
the end effector (102) further comprises:
a second arm (130) that is coupled to and movable relative to the base (122); and
a second arm-gripper (132) that is coupled to the second arm (130);
the second arm-gripper (132) is configured for holding the ply (202); and
the second arm (130) is configured for moving relative to the base (122) and the forming-surface (104) such that a third ply-portion (208) of the ply (202) is placed on a third surface-portion (116) of the forming-surface (104), and
wherein preferably the second arm (130) is configured for moving relative to the base (122) and the forming-surface (104) such that the third ply-portion (208) of the ply (204) is draped over a second radiused corner (118) of the forming-surface (104) between the first surface-portion (108) and the third surface-portion (116) of the forming-surface (104).

## Patentansprüche

1. Verfahren (1000) zum Herstellen einer Keramikmatrixverbundstruktur (218), das Verfahren (1000) umfassend:
Aufnehmen einer Lage (202) eines Keramikmatrixverbundmaterials (200) unter Verwendung eines Endeffektors (102);
Bewegen der Lage (202) zu einer Formoberfläche (104) unter Verwendung des Endeffektors (102); und
Anpassen der Lage (202) an eine Form (106) der Formoberfläche (104) unter Verwendung des Endeffektors (102), wobei:
das Anpassen der Lage (202) umfasst:
Platzieren eines ersten Lagenabschnitts (204) der Lage (202) auf einem ersten Oberflächenabschnitt (108) der Formoberfläche (104) unter Verwendung des Endeffektors (102); und
Platzieren eines zweiten Lagenabschnitts (206) der Lage (202) auf einem zweiten Oberflächenabschnitt (110) der Formoberfläche (104) unter Verwendung des Endeffektors (102); und
wobei der erste Oberflächenabschnitt (108) und der zweite Oberflächenabschnitt (110) nicht koplanar sind, und wobei das Anpassen der Lage (202) ferner umfasst:
Halten des ersten Lagenabschnitts (204) der Lage (204) auf dem ersten Oberflächenabschnitt (108) der Formoberfläche (104) unter Verwendung des Endeffektors (102); und
Drapieren des zweiten Lagenabschnitts (206) der Lage (204) über eine abgerundete Ecke (112) der Formoberfläche (104) zwischen dem ersten Oberflächenabschnitt (108) und dem zweiten Oberflächenabschnitt (110) der Formoberfläche (104) unter Verwendung des Endeffektors (102) vor dem Platzieren des zweiten Lagenabschnitts (206) der Lage (202) auf dem zweiten Oberflächenabschnitt (110).

2. Verfahren (1000) nach Anspruch 1, wobei das Anpassen der Lage (202) ferner ein Anlegen einer Spannung (114) auf den zweiten Lagenabschnitt (206) der Lage (202) unter Verwendung des Endeffektors (102), während der zweite Lagenabschnitt (206) über die abgerundete Ecke (112) der Formoberfläche (104) drapiert wird und der zweite Lagenabschnitt (206) auf dem zweiten Oberflächenabschnitt (110) der Formoberfläche (104) platziert wird, umfasst.

3. Verfahren (1000) nach Anspruch 1 oder 2, wobei:
das Anpassen der Lage (202) ferner umfasst:
Drapieren eines dritten Lagenabschnitts (208) der Lage (204) über eine zweite abgerundete Ecke (118) der Formoberfläche (104) zwischen dem ersten Oberflächenabschnitt (108) und einem dritten Oberflächenabschnitt (116) der Formoberfläche (104) unter Verwendung des Endeffektors (102) vor dem Platzieren des dritten Lagenabschnitts (208) der Lage (202) auf dem dritten Oberflächenabschnitt (116); und
Platzieren des dritten Lagenabschnitts (208) der Lage (202) auf dem dritten Oberflächenabschnitt (116) der Formoberfläche (104) unter Verwendung des Endeffektors (102); und
der erste Oberflächenabschnitt (108) und der dritte Oberflächenabschnitt (116) nicht koplanar sind.

4. Verfahren (1000) nach Anspruch 3, wobei das Anpassen der Lage (202) ferner das Anlegen einer Spannung (114) auf den dritten Lagenabschnitt (208) der Lage (202) unter Verwendung des Endeffektors (102), während des Drapierens des dritten Lagenabschnitts (208) über die zweite abgerundete Ecke (118) der Formoberfläche (104) und des Platzierens des dritten Lagenabschnitts (208) auf dem dritten Oberflächenabschnitt (116) der Formoberfläche (104), umfasst.

5. Verfahren (1000) nach einem der vorstehenden Ansprüche, ferner umfassend ein Auswählen einer Faserausrichtung einer Keramikverstärkung (210) der Lage (202) relativ zu einer vorherigen Lage (222).

6. Verfahren (1000) nach einem der vorstehenden Ansprüche, wobei:
der Endeffektor (102) umfasst:
eine Basis (122);
einen Arm (124), der an die Basis (122) gekoppelt und relativ zu dieser beweglich ist;
einen Basisgreifer (126), der an die Basis (122) gekoppelt ist; und
einen Armgreifer (128), der an den Arm (124) gekoppelt ist;
das Aufnehmen der Lage (202) umfasst:
Anhaften des Basisgreifers (126) an einen ersten Lagenabschnitt (204) der Lage (202); und
Anhaften des Armgreifers (128) an einen zweiten Lagenabschnitt (206) der Lage (202);
das Anpassen der Lage (202) umfasst:
Bewegen des Endeffektors (102) relativ zu der Formoberfläche (104), derart, dass der erste Lagenabschnitt (204) der Lage (202) auf einem ersten Oberflächenabschnitt (108) der Formoberfläche (104) platziert wird; und
Bewegen des Arms (124) relativ zu der Basis (122) und zu der Formoberfläche (104) derart, dass der zweite Lagenabschnitt (206) auf einem zweiten Oberflächenabschnitt (110) der Formoberfläche (104) platziert wird; und
der erste Oberflächenabschnitt (108) und der zweite Oberflächenabschnitt (110) nicht koplanar sind.

7. Verfahren (1000) nach Anspruch 6, wobei das Anpassen der Lage (202) ferner umfasst:
Halten des ersten Lagenabschnitts (204) auf dem ersten Oberflächenabschnitt (108); und
Bewegen des Arms (124) relativ zu der Basis (122) und zu der Formoberfläche (104) derart, dass der zweite Lagenabschnitt (206) über eine abgerundete Ecke (112) der Formoberfläche (104) zwischen dem ersten Oberflächenabschnitt (108) und dem zweiten Oberflächenabschnitt (110) der Formoberfläche (104) drapiert wird.

8. Verfahren (1000) nach Anspruch 7, wobei:
der Endeffektor (102) ferner umfasst:
einen zweiten Arm (130), der an die Basis (122) gekoppelt und relativ zu dieser beweglich ist; und
wobei ein zweiter Armgreifer (132) an den zweiten Arm (130) gekoppelt ist;
das Aufnehmen der Lage (202) ferner das Anhaften des zweiten Armgreifers (132) an einen dritten Lagenabschnitt (208) der Lage (202) umfasst;
das Anpassen der Lage (202) ferner das Bewegen des zweiten Arms (130) relativ zu der Basis (122) und zu der Formoberfläche (104), derart, dass der dritte Lagenabschnitt (208) auf einem dritten Flächenabschnitt (116) der Formoberfläche (104) platziert wird, umfasst; und
der erste Oberflächenabschnitt (108) und der dritte Oberflächenabschnitt (116) nicht koplanar sind.

9. Verfahren (1000) nach Anspruch 8, wobei das Anpassen der Lage (202) ferner umfasst:
Halten des ersten Lagenabschnitts (204) auf dem ersten Oberflächenabschnitt (108); und
Bewegen des zweiten Arms (130) relativ zu der Basis (122) und zu der Formoberfläche (104), derart, dass der dritte Lagenabschnitt (208) über eine zweite abgerundete Ecke (118) der Formoberfläche (104) zwischen dem ersten Flächenabschnitt (108) und dem dritten Flächenabschnitt (116) der Formoberfläche (104) drapiert wird.

10. Verfahren (1000) nach Anspruch 9, wobei das Anpassen der Lage (202) ferner umfasst:
Bewegen des Arms (124) relativ zu der Basis (122), derart, dass eine Spannung (114) auf den zweiten Lagenabschnitt (206) der Lage (202) ausgeübt wird; und
Bewegen des zweiten Arms (130) relativ zu der Basis (122), derart, dass die Spannung (114) auf den dritten Lagenabschnitt (208) der Lage (202) ausgeübt wird.

11. Verfahren (1000) nach einem der vorstehenden Ansprüche, wobei:
die Lage (202) des Keramikmatrixverbundmaterials (200) eine Keramikverstärkung (210) und eine Kermikmatrix (212) umfasst;
die Keramikverstärkung (210) mindestens eines von Kohlenstoffverstärkungsfasern, Siliziumkarbidverstärkungsfasern, Tonerdeverstärkungsfasern, Tonerdesiliziumdioxidverstärkungsfasern, Aluminiumnitridverstärkungsfasern, Siliziumnitridverstärkungsfasern, Mullitverstärkungsfasern, Siliziumdioxid-/Quarzverstärkungsfasern, Basaltverstärkungsfasern und Zirkonoxidverstärkungsfasern umfasst; und
die Keramikmatrix (212) mindestens eines von einer Kohlenstoffmatrix, einer Siliziumcarbidmatrix, einer Tonerdematrix, einer Tonerdesiliziumdioxidmatrix, einer Aluminiumnitridmatrix, einer Siliziumnitridmatrix, einer Mullitmatrix, einer Geopolymermatrix und einer Zirkonoxidmatrix umfasst.

12. Verfahren (2000) nach einem der vorstehenden Ansprüche, ferner umfassend den Schritt des Positionierens eines Keramikmatrixverbundmaterials (200), umfassend die Schritte:
Positionieren eines Endeffektors (102) relativ zu einer Lage (202) des Keramikmatrixverbundmaterials (200), wobei der Endeffektor (102) umfasst:
eine Basis (122);
einen Arm (124), der an die Basis (122) gekoppelt und relativ zu dieser beweglich ist;
einen Basisgreifer (126), der an die Basis (122) gekoppelt ist; und
einen Armgreifer (128), der an den Arm (124) gekoppelt ist;
Anhaften des Basisgreifers (126) an einen ersten Lagenabschnitt (204) der Lage (202);
Anhaften des Armgreifers (128) an einen zweiten Lagenabschnitt (206) der Lage (202);
Bewegen des Endeffektors (102) relativ zu einer Formoberfläche (104), derart, dass der erste Lagenabschnitt (204) der Lage (202) auf einem ersten Oberflächenabschnitt (108) der Formoberfläche (104) platziert wird; und
Bewegen des Arms (124) relativ zu der Basis (122) und zu der Formoberfläche (104), derart, dass der zweite Lagenabschnitt (206) auf einem zweiten Oberflächenabschnitt (110) der Formoberfläche (104) platziert wird,
wobei der erste Oberflächenabschnitt (108) und der zweite Oberflächenabschnitt (110) nicht koplanar sind.

13. Verfahren (2000) nach Anspruch 12, ferner umfassend:
Halten des ersten Lagenabschnitts (204) auf dem ersten Oberflächenabschnitt (108);
Bewegen des Arms (124) relativ zu der Basis (122), derart, dass eine Spannung (114) auf den zweiten Lagenabschnitt (206) der Lage (202) ausgeübt wird; und
Bewegen des Arms (124) relativ zu der Basis (122) und zu der Formoberfläche (104) derart, dass der zweite Lagenabschnitt (206) über eine abgerundete Ecke (112) der Formoberfläche (104) zwischen dem ersten Oberflächenabschnitt (108) und dem zweiten Oberflächenabschnitt (110) der Formoberfläche (104) drapiert wird.

14. System (100) zum Herstellen einer Keramikmatrixverbundstruktur (218), das System (100) umfassend:
ein Werkzeug (134), das eine Werkzeugoberfläche (136) aufweist;
eine Formoberfläche (104), die durch die Werkzeugoberfläche (136) ausgebildet wird oder die durch mindestens einen Abschnitt einer vorherigen Lageoberfläche (224) einer vorherigen Lage (222) eines Keramikmatrixverbundmaterials (200) ausgebildet wird, und wobei die Formoberfläche (104) umfasst:
mindestens einen ersten Oberflächenabschnitt (108) und einen zweiten Oberflächenabschnitt (110); und
eine abgerundete Kante (112) zwischen dem ersten Oberflächenabschnitt (108) und dem zweiten Oberflächenabschnitt (110) der Formoberfläche (104);
bei Verwendung des Systems mindestens eine Lage (202) eines Keramikmatrixverbundmaterials (200);
einen Robotermanipulator (142); und
einen Endeffektor (102), der an den Robotermanipulator (142) gekoppelt ist, wobei:
der Endeffektor (102) umfasst:
eine Basis (122);
einen Arm (124), der an die Basis (122) gekoppelt und relativ zu dieser beweglich ist;
einen Basisgreifer (126), der an die Basis (122) gekoppelt ist; und
einen Armgreifer (128), der an den Arm (124) gekoppelt ist;
der Basisgreifer (126) und der Armgreifer (128) zum Halten der Lage (202) aus Keramikmatrixverbundmaterial (200) konfiguriert sind;
der Robotermanipulator (142) zum Bewegen der Lage (202) relativ zu der Formoberfläche (104) konfiguriert ist, derart, dass ein erster Lagenabschnitt (204) auf dem ersten Oberflächenabschnitt (108) der Formoberfläche (104) platziert wird; und
der Arm (124) zum Bewegen relativ zu der Basis (122) und der Formoberfläche (104) konfiguriert ist, derart, dass ein zweiter Lagenabschnitt (206) der Lage (202) auf dem zweiten Oberflächenabschnitt (110) der Formoberfläche (104) platziert wird.

15. System (100) nach Anspruch 14, wobei:
die Basis (122) des Endeffektors (102) zum Halten des ersten Lagenabschnitts (204) der Lage (204) auf dem ersten Oberflächenabschnitt (108) der Formoberfläche (104) konfiguriert ist; und
der Arm (124) zum Bewegen relativ zu der Basis (122) und der Formoberfläche (104) konfiguriert ist, derart, dass der zweite Lagenabschnitt (206) der Lage (204) über die abgerundete Ecke (112) der Formoberfläche (104) zwischen dem ersten Oberflächenabschnitt (108) und dem zweiten Oberflächenabschnitt (110) der Formoberfläche (104) drapiert wird, und/oder
wobei der Arm (124) zum Bewegen relativ zu der Basis (122) konfiguriert ist, derart, dass eine Spannung (114) auf den zweiten Lagenabschnitt (206) der Lage (204) angelegt wird,
wobei vorzugsweise:
der Endeffektor (102) ferner umfasst:
einen zweiten Arm (130), der an die Basis (122) gekoppelt und relativ zu dieser beweglich ist; und
einen zweiten Armgreifer (132), der an den zweiten Arm (130) gekoppelt ist;
der zweite Armgreifer (132) zum Halten der Lage (202) konfiguriert ist; und
der zweite Arm (130) zum Bewegen relativ zu der Basis (122) und der Formoberfläche (104) konfiguriert ist, derart, dass ein dritter Lagenabschnitt (208) der Lage (202) auf einem dritten Oberflächenabschnitt (116) der Formoberfläche (104) platziert wird, und
wobei vorzugsweise der zweite Arm (130) zum Bewegen relativ zu der Basis (122) und der Formoberfläche (104) konfiguriert ist, derart, dass der dritte Lagenabschnitt (208) der Lage (204) über eine zweite abgerundete Ecke (118) der Formoberfläche (104) zwischen dem ersten Oberflächenabschnitt (108) und dem dritten Oberflächenabschnitt (116) der Formoberfläche (104) drapiert wird.

## Revendications

1. Procédé (1000) de fabrication d'une structure composite à matrice en céramique (218), le procédé (1000) comprenant :
le prélèvement d'une couche (202) d'un matériau composite à matrice en céramique (200) à l'aide d'un effecteur terminal (102) ;
le déplacement de la couche (202) vers une surface de formage (104) à l'aide de l'effecteur terminal (102) ; et
la conformation de la couche (202) à une forme (106) de la surface de formage (104) à l'aide de l'effecteur terminal (102), dans lequel :
la conformation de la couche (202) comprend :
le placement d'une première portion de couche (204) de la couche (202) sur une première portion de surface (108) de la surface de formage (104) à l'aide de l'effecteur terminal (102) ; et
le placement d'une deuxième portion de couche (206) de la couche (202) sur une deuxième portion de surface (110) de la surface de formage (104) à l'aide de l'effecteur terminal (102) ; et
la première portion de surface (108) et la deuxième portion de surface (110) sont non coplanaires, et dans lequel la conformation de la couche (202) comprend en outre :
le maintien de la première portion de couche (204) de la couche (204) sur la première portion de surface (108) de la surface de formage (104) à l'aide de l'effecteur terminal (102) ; et
le drapage de la deuxième portion de couche (206) de la couche (204) sur un coin arrondi (112) de la surface de formage (104) entre la première portion de surface (108) et la deuxième portion de surface (110) de la surface de formage (104) à l'aide de l'effecteur terminal (102) avant de placer la deuxième portion de couche (206) de la couche (202) sur la deuxième portion de surface (110).

2. Procédé (1000) selon la revendication 1, dans lequel la conformation de la couche (202) comprend en outre l'application d'une tension (114) à la deuxième portion de couche (206) de la couche (202) à l'aide de l'effecteur terminal (102) tout en drapant la deuxième portion de couche (206) sur le coin arrondi (112) de la surface de formage (104) et en plaçant la deuxième portion de couche (206) sur la deuxième portion de surface (110) de la surface de formage (104).

3. Procédé (1000) selon la revendication 1 ou 2, dans lequel :
la conformation de la couche (202) comprend en outre :
le drapage d'une troisième portion de couche (208) de la couche (204) sur un deuxième coin arrondi (118) de la surface de formage (104) entre la première portion de surface (108) et une troisième portion de surface (116) de la surface de formage (104) à l'aide de l'effecteur terminal (102) avant de placer la troisième portion de couche (208) de la couche (202) sur la troisième portion de surface (116) ; et
le placement de la troisième portion de couche (208) de la couche (202) sur la troisième portion de surface (116) de la surface de formage (104) à l'aide de l'effecteur terminal (102) ; et
la première portion de surface (108) et la troisième portion de surface (116) sont non coplanaires.

4. Procédé (1000) selon la revendication 3, dans lequel la conformation de la couche (202) comprend en outre l'application d'une tension (114) à la troisième portion de couche (208) de la couche (202) à l'aide de l'effecteur terminal (102) tout en drapant la troisième portion de couche (208) sur le deuxième coin arrondi (118) de la surface de formage (104) et en plaçant la troisième portion de couche (208) sur la troisième portion de surface (116) de la surface de formage (104).

5. Procédé (1000) selon l'une quelconque des revendications précédentes, comprenant en outre la sélection d'une orientation de fibres d'un renfort en céramique (210) de la couche (202) par rapport à une couche précédente (222).

6. Procédé (1000) selon l'une quelconque des revendications précédentes, dans lequel :
l'effecteur terminal (102) comprend :
une base (122) ;
un bras (124) qui est accouplé à la base (122) et mobile par rapport à celle-ci ;
un préhenseur de base (126) qui est accouplé à la base (122) ; et
un préhenseur de bras (128) qui est accouplé au bras (124) ;
le prélèvement de la couche (202) comprend :
le fait de faire adhérer le préhenseur de base (126) à une première portion de couche (204) de la couche (202) ; et
le fait de faire adhérer le préhenseur de bras (128) à une deuxième portion de couche (206) de la couche (202) ;
la conformation de la couche (202) comprend :
le déplacement de l'effecteur terminal (102) par rapport à la surface de formage (104) de telle sorte que la première portion de couche (204) de la couche (202) soit placée sur une première portion de surface (108) de la surface de formage (104) ; et
le déplacement du bras (124) par rapport à la base (122) et à la surface de formage (104) de telle sorte que la deuxième portion de couche (206) soit placée sur une deuxième portion de surface (110) de la surface de formage (104) ; et
la première portion de surface (108) et la deuxième portion de surface (110) sont non coplanaires.

7. Procédé (1000) selon la revendication 6, dans lequel la conformation de la couche (202) comprend en outre :
le maintien de la première portion de couche (204) sur la première portion de surface (108) ; et
le déplacement du bras (124) par rapport à la base (122) et à la surface de formage (104) de telle sorte que la deuxième portion de couche (206) soit drapée sur un coin arrondi (112) de la surface de formage (104) entre la première portion de surface (108) et la deuxième portion de surface (110) de la surface de formage (104).

8. Procédé (1000) selon la revendication 7, dans lequel :
l'effecteur terminal (102) comprend en outre :
un deuxième bras (130) qui est accouplé à la base (122) et mobile par rapport à celle-ci ; et
un deuxième préhenseur de bras (132) est accouplé au deuxième bras (130) ;
le prélèvement de la couche (202) comprend en outre le fait de faire adhérer le deuxième préhenseur de bras (132) à une troisième portion de couche (208) de la couche (202) ;
la conformation de la couche (202) comprend en outre le déplacement du deuxième bras (130) par rapport à la base (122) et à la surface de formage (104) de telle sorte que la troisième portion de couche (208) soit placée sur une troisième portion de surface (116) de la surface de formage (104) ; et
la première portion de surface (108) et la troisième portion de surface (116) sont non coplanaires.

9. Procédé (1000) selon la revendication 8, dans lequel la conformation de la couche (202) comprend en outre :
le maintien de la première portion de couche (204) sur la première portion de surface (108) ; et
le déplacement du deuxième bras (130) par rapport à la base (122) et à la surface de formage (104) de telle sorte que la troisième portion de couche (208) soit drapée sur un deuxième coin arrondi (118) de la surface de formage (104) entre la première portion de surface (108) et la troisième portion de surface (116) de la surface de formage (104).

10. Procédé (1000) selon la revendication 9, dans lequel la conformation de la couche (202) comprend en outre :
le déplacement du bras (124) par rapport à la base (122) de telle sorte qu'une tension (114) soit appliquée à la deuxième portion de couche (206) de la couche (202) ; et
le déplacement du deuxième bras (130) par rapport à la base (122) de telle sorte que la tension (114) soit appliquée à la troisième portion de couche (208) de la couche (202).

11. Procédé (1000) selon l'une quelconque des revendications précédentes, dans lequel :
la couche (202) du matériau composite à matrice en céramique (200) comprend un renfort en céramique (210) et une matrice en céramique (212) ;
le renfort en céramique (210) comprend au moins l'une parmi des fibres de renfort en carbone, des fibres de renfort en carbure de silicium, des fibres de renfort en alumine, des fibres de renfort en alumine-silice, des fibres de renfort en nitrure d'aluminium, des fibres de renfort en nitrure de silicium, des fibres de renfort en mullite, des fibres de renfort en silice/quartz, des fibres de renfort en basalte et des fibres de renfort en zircone ; et
la matrice en céramique (212) comprend au moins l'une parmi une matrice de carbone, une matrice de carbure de silicium, une matrice d'alumine, une matrice d'alumine-silice, une matrice de nitrure d'aluminium, une matrice de nitrure de silicium, une matrice de mullite, une matrice de géopolymère et une matrice de zircone.

12. Procédé (2000) selon l'une quelconque des revendications précédentes, comprenant en outre l'étape consistant à positionner un matériau composite à matrice en céramique (200) comprenant les étapes de consistant à :
positionner un effecteur terminal (102) par rapport à une couche (202) du matériau composite à matrice en céramique (200), dans lequel l'effecteur terminal (102) comprend :
une base (122) ;
un bras (124) qui est accouplé à la base (122) et mobile par rapport à celle-ci ;
un préhenseur de base (126) qui est accouplé à la base (122) ; et
un préhenseur de bras (128) qui est accouplé au bras (124) ;
faire adhérer le préhenseur de base (126) à une première portion de couche (204) de la couche (202) ;
faire adhérer le préhenseur de bras (128) à une deuxième portion de couche (206) de la couche (202) ;
déplacer l'effecteur terminal (102) par rapport à une surface de formage (104) de telle sorte que la première portion de couche (204) de la couche (202) soit placée sur une première portion de surface (108) de la surface de formage (104) ; et
déplacer le bras (124) par rapport à la base (122) et à la surface de formage (104) de telle sorte que la deuxième portion de couche (206) soit placée sur une deuxième portion de surface (110) de la surface de formage (104),
dans lequel la première portion de surface (108) et la deuxième portion de surface (110) sont non coplanaires.

13. Procédé (2000) selon la revendication 12, comprenant en outre :
le maintien de la première portion de couche (204) sur la première portion de surface (108) ;
le déplacement du bras (124) par rapport à la base (122) de telle sorte qu'une tension (114) soit appliquée à la deuxième portion de couche (206) de la couche (202) ; et
le déplacement du bras (124) par rapport à la base (122) et à la surface de formage (104) de telle sorte que la deuxième portion de couche (206) soit drapée sur un coin arrondi (112) de la surface de formage (104) entre la première portion de surface (108) et la deuxième portion de surface (110) de la surface de formage (104).

14. Système (100) de fabrication d'une structure composite à matrice en céramique (218), le système (100) comprenant :
un outil (134) ayant une surface d'outil (136) ;
une surface de formage (104) qui est formée par la surface d'outil (136) ou qui est formée par au moins une portion d'une surface de couche précédente (224) d'une couche précédente (222) d'un matériau composite à matrice en céramique (200), et dans lequel la surface de formage (104) comprend :
au moins une première portion de surface (108) et une deuxième portion de surface (110) ; et
un bord arrondi (112) entre la première portion de surface (108) et la deuxième portion de surface (110) de la surface de formage (104) ;
lors de l'utilisation du système, au moins une couche (202) d'un matériau composite à matrice en céramique (200) ;
un manipulateur robotique (142) ; et
un effecteur terminal (102) qui est accouplé au manipulateur robotique (142), dans lequel :
l'effecteur terminal (102) comprend :
une base (122) ;
un bras (124) qui est accouplé à la base (122) et mobile par rapport à celle-ci ;
un préhenseur de base (126) qui est accouplé à la base (122) ; et
un préhenseur de bras (128) qui est accouplé au bras (124) ;
le préhenseur de base (126) et le préhenseur de bras (128) sont conçus pour maintenir la couche (202) de matériau composite à matrice en céramique (200) ;
le manipulateur robotique (142) est conçu pour déplacer la couche (202) par rapport à la surface de formage (104) de telle sorte qu'une première portion de couche (204) soit placée sur la première portion de surface (108) de la surface de formage (104) ; et
le bras (124) est conçu pour se déplacer par rapport à la base (122) et à la surface de formage (104) de telle sorte qu'une deuxième portion de couche (206) de la couche (202) soit placée sur la deuxième portion de surface (110) de la surface de formage (104).

15. Système (100) selon la revendication 14, dans lequel :
la base (122) de l'effecteur terminal (102) est conçue pour maintenir la première portion de couche (204) de la couche (204) sur la première portion de surface (108) de la surface de formage (104) ; et
le bras (124) est conçu pour se déplacer par rapport à la base (122) et à la surface de formage (104) de telle sorte que la deuxième portion de couche (206) de la couche (204) soit drapée sur le coin arrondi (112) de la surface de formage (104) entre la première portion de surface (108) et la deuxième portion de surface (110) de la surface de formage (104), et/ou
dans lequel le bras (124) est conçu pour se déplacer par rapport à la base (122) de telle sorte qu'une tension (114) soit appliquée à la deuxième portion de couche (206) de la couche (204),
dans lequel, de préférence :
l'effecteur terminal (102) comprend en outre :
un deuxième bras (130) qui est accouplé à la base (122) et mobile par rapport à celle-ci ; et
un deuxième préhenseur de bras (132) qui est accouplé au deuxième bras (130) ;
le deuxième préhenseur de bras (132) est conçu pour maintenir la couche (202) ; et
le deuxième bras (130) est conçu pour se déplacer par rapport à la base (122) et à la surface de formage (104) de telle sorte qu'une troisième portion de couche (208) de la couche (202) soit placée sur une troisième portion de surface (116) de la surface de formage (104), et
dans lequel, de préférence, le deuxième bras (130) est conçu pour se déplacer par rapport à la base (122) et à la surface de formage (104) de sorte que la troisième portion de couche (208) de la couche (204) soit drapée sur un deuxième coin arrondi (118) de la surface de formage (104) entre la première portion de surface (108) et la troisième portion de surface (116) de la surface de formage (104).
